(19) Europäisches Patentamt
European Patent Office
Office européen des brevets

(11) EP 3 952 568 B1

(12) **EUROPEAN PATENT SPECIFICATION**

(45) Date of publication and mention of the grant of the patent:
**22.01.2025 Bulletin 2025/04**

(21) Application number: **20783535.6**

(22) Date of filing: **28.03.2020**

(51) International Patent Classification (IPC):
***H04W 74/0833*** *(2024.01)* ***H04L 5/00*** *(2006.01)*

(52) Cooperative Patent Classification (CPC):
**H04W 74/0833; H04L 5/0048; H04L 5/0094; H04W 56/0045;** H04W 74/006; H04W 74/0836; H04W 74/0838

(86) International application number:
**PCT/CN2020/081937**

(87) International publication number:
**WO 2020/200134 (08.10.2020 Gazette 2020/41)**

(54) **RANDOM ACCESS METHOD, AND COMMUNICATION DEVICE**

DIREKTZUGRIFFSVERFAHREN UND KOMMUNIKATIONSVORRICHTUNG

PROCÉDÉ D’ACCÈS ALÉATOIRE, ET DISPOSITIF DE COMMUNICATION

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **29.03.2019 CN 201910253051**

(43) Date of publication of application:
**09.02.2022 Bulletin 2022/06**

(73) Proprietor: **Huawei Technologies Co., Ltd.**
**Shenzhen, Guangdong 518129 (CN)**

(72) Inventors:
- **WU, Yiqun**
  **Shenzhen, Guangdong 518129 (CN)**
- **CHEN, Yan**
  **Shenzhen, Guangdong 518129 (CN)**
- **WANG, Yi**
  **Shenzhen, Guangdong 518129 (CN)**

(74) Representative: **Epping - Hermann - Fischer Patentanwaltsgesellschaft mbH**
**Schloßschmidstraße 5**
**80639 München (DE)**

(56) References cited:
**CN-A- 101 473 562**
**CN-A- 102 812 761**
**CN-A- 108 366 421**

- **No further relevant documents disclosed**
- **CATT: "Discussion on Channel Structure for 2-Step RACH", 3GPP TSG RAN WG1 MEETING #96 R1-1902027, 16 February 2019 (2019-02-16), XP051599723**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 3 952 568 B1

# Description

## CROSS-REFERENCE TO RELATED APPLICATIONS

This application claims priority to Chinese Patent Application No. 201910253051.8, filed with the China National Intellectual Property Administration on March 29, 2019 and entitled "RANDOM ACCESS METHOD AND COMMUNICATION APPARATUS.

## TECHNICAL FIELD

Embodiments of this application relate to the field of communication technologies, and in particular, to a random access method and a communication apparatus.

## BACKGROUND

A random access (random access, RA) procedure of user equipment (user equipment, UE) may also be referred to as a random access channel (random access channel, RACH) procedure. A new radio (new radio, NR) system is used as an example. An RA procedure may be used in scenarios such as initial access, cell handover, uplink out-of-synchronization, scheduling request (scheduling request, SR) failure, system message request, beam failure recovery, and the like. The RA procedure includes two possible manners: a contention-based (Contention-based) RA procedure and a contention-free (Contention-free) RA procedure. For an application scenario with a low delay requirement, an existing two-step RA procedure is used, and specifically includes: UE sends a message A (MsgA) to a base station, where the MsgA may include two parts: a random access preamble and uplink data. After receiving the MsgA, the base station sends a message B (MsgB) to the UE, where the MsgB is used for random access response and contention resolution.

See for example publication "Discussion on Channel Structure for 2-Step RACH", R1-1902027, for 2-step RACH resource utilization.

Because there may be a relatively large timing offset between uplink data parts in MsgBs sent by different UEs, there is relatively strong interference between the UEs.

## SUMMARY

Embodiments of this application provide a random access method according to claims 1 and 8, a communication apparatus according to claim 9, a computer-readable storage medium according to claim 10 and a computer program product according to claim 11, to resolve a problem in an existing technology: interference between UEs.

## BRIEF DESCRIPTION OF DRAWINGS

FIG. 1 is a schematic architectural diagram of a communication system according to an embodiment of this application;

FIG. 2(a) and FIG. 2(b) are a schematic flowchart of a random access procedure according to an embodiment of this application;

FIG. 3(a) and FIG. 3(b) are a schematic flowchart of another random access procedure according to an embodiment of this application;

FIG. 4(a) and FIG. 4(b) are a schematic diagram of uplink time adjustment according to an embodiment of this application;

FIG. 5 is a schematic flowchart of a random access method according to an embodiment of this application;

FIG. 6A is a schematic diagram of a resource correspondence in a first example of a first possible implementation in an embodiment of this application;

FIG. 6B is a schematic diagram of a resource correspondence in a second example of a first possible implementation in an embodiment of this application;

FIG. 6C is a schematic diagram of a resource correspondence in a third example of a first possible implementation in an embodiment of this application;

FIG. 7 is a schematic flowchart of another random access method according to an embodiment of this application;

FIG. 8A is a schematic diagram of a resource correspondence in a first example of a second possible implementation in an embodiment of this application;

FIG. 8B is a schematic diagram of a resource correspondence in a second example of a second possible implementation in an embodiment of this application;

FIG. 9 is a schematic structural diagram of a communication apparatus 800 according to an embodiment of this application;

FIG. 10 is a schematic structural diagram of a communication apparatus 900 according to an embodiment of this application;

FIG. 11 is a schematic structural diagram of a base station 1000 according to an embodiment of this application; and

FIG. 12 is a schematic structural diagram of a terminal device 1100 according to an embodiment of this application.

## DESCRIPTION OF EMBODIMENTS

It should be understood that "an embodiment", "an implementation", "an implementation", or "an example" mentioned in the entire specification means that particular features, structures, or characteristics related to embodiments are included in at least one embodiment of this application. Therefore, "in an embodiment", "in an implementation", "in an implementation", or "in an example" appearing throughout the entire specification does not necessarily refer to a same embodiment. In addition, these particular features, structures, or characteristics may be combined in one or more embodiments in any appropriate manner. It should be understood that sequence numbers of the foregoing processes do not mean execution sequences in various embodiments of this application. The execution sequences of the processes should be determined based on functions and internal logic of the processes, and should not be construed as any limitation on the implementation processes of the embodiments of this application.

In addition, the terms "system" and "network" in this specification may be often used interchangeably in this specification. The term "and/or" in this specification describes only an association relationship for describing associated objects and represents that three relationships may exist. For example, A and/or B may represent the following three cases: Only A exists, both A and B exist, and only B exists. In addition, the character "/" in this specification generally indicates an "or" relationship between the associated objects. It should be understood that in the embodiments of this application, "B corresponding to A" indicates that B is associated with A, and B may be determined based on A. However, it should be further understood that determining B based on A does not mean that B is determined based on only A. B may alternatively be determined based on A and/or other information. In addition, unless otherwise stated, ordinal numbers such as "first" and "second" in the embodiments of this application are used to distinguish between a plurality of objects, but are not intended to limit a sequence, a time sequence, priorities, or importance of the plurality of objects. In addition, the terms "include" and "have" in the embodiments, claims, and accompanying drawings of this application are not exclusive. For example, a process, method, system, product, or device including a series of steps or modules is not limited to the listed steps or modules, and may further include a step or module that is not listed.

The embodiments of this application may be applied to but is not limited to a 5G system, such as an NR system, may be further applied to a communication system such as an LTE system, a long term evolution-advanced (long term evolution-advanced, LTE-A) system, or an enhanced long term evolution technology (enhanced long term evolution-advanced, eLTE) system, and may further be extended to cellular systems related to, for example, wireless fidelity (wireless fidelity, Wi-Fi), worldwide interoperability for microwave access (worldwide interoperability for microwave access, wimax), and 3GPP. Specifically, an architecture of a communication system applied to the embodiments of this application may be shown in FIG. 1, and includes a network device and a plurality of terminal devices. In FIG. 1, three terminal devices are used as an example. A terminal device 1 to a terminal device 3 may separately or simultaneously send uplink data to the network device. It should be noted that a quantity of terminal devices and a quantity of network devices in the communication system shown in FIG. 1 are not limited in the embodiments of this application.

The following describes some terms in this application, to facilitate understanding of a person skilled in the art. (1) A terminal device includes a device that provides a user with voice and/or data connectivity, for example, may include a handheld device having a wireless connection function, or a processing device connected to a wireless modem. The terminal device may communicate with a core network through a radio access network (radio access network, RAN), and exchange voice and/or data with the RAN. The terminal device may include user equipment (user equipment, UE), a wireless terminal device, a mobile terminal device, a device-to-device communication (device-to-device, D2D) terminal device, a V2X terminal device, a machine-to-machine/machine-type communications (machine-to-machine /machine-type communications, M2M/MTC) terminal device, an internet of things (internet of things, IoT) terminal device, a subscriber unit (subscriber unit), a subscriber station (subscriber station), a mobile station (mobile station), a remote station (remote station), an access point (access point, AP), a remote terminal (remote terminal), an access terminal (access terminal), a user terminal (user terminal), a user agent (user agent), a user device (user device), or the like. For example, the terminal device may include a mobile phone (or referred to as a "cellular" phone), a computer with a mobile terminal device, a portable, pocket-sized, handheld, or computer built-in mobile apparatus, or the like. For example, the terminal device is a device such as a personal communications service (personal communications service, PCS) phone, a cordless phone, a session initiation protocol (session initiation protocol, SIP) phone, a wireless local loop (wireless local loop, WLL) station, or a personal digital assistant (personal digital assistant, PDA). The terminal device further includes a limited device, for example, a device having low power consumption, a device having a limited storage capability, or a device having a limited computing capability. For example, the terminal device includes an information sensing device, for example, a barcode, radio frequency identification (radio frequency identification, RFID), a sensor, a global positioning system (global positioning system, GPS), or a laser scanner.

By way of example, but not limitation, the terminal device in the embodiments of this application may alternatively be a wearable device. The wearable device may also be referred to as a wearable intelligent device, an intelligent wearable device, or the like, and is a generic term for wearable devices that are developed by applying wearable technologies to intelligently design daily wear, such as glasses, gloves, watches, clothes, and shoes. The wearable device is a portable device that is directly worn on a body or integrated into clothes or an accessory of the user. The wearable device is not only a hardware device, but also implements a powerful function through software support, data exchange, and cloud interaction. In a broad sense, the wearable intelligent device includes full-featured and large-sized devices that can implement all or some functions without depending on smartphones, for example, smart watches or smart glasses, and devices that focus on only one type of application function and need to work with other devices such as smartphones, for example, various smart bands, smart helmets, or smart jewelry for monitoring physical signs. However, if the various terminal devices described above are located on a vehicle (for example, placed inside the vehicle or mounted inside the vehicle), the terminal devices may be considered as vehicle-mounted terminal devices. For example, the vehicle-mounted terminal devices are also referred to as on-board units (onboard unit, OBU).

In the embodiments of this application, the terminal device may further include a relay (relay). Alternatively, it may be understood that any device that can perform data communication with a base station may be considered as a terminal device. In the following descriptions, an example in which the terminal device is referred to as UE for short is used. (2) A network device may be a device that is in an access network and that communicates with a wireless terminal device over an air interface through one or more cells. The network device may be a node in a radio access network, and may also be referred to as a base station or a radio access network (radio access network, RAN) node (or device). In the following descriptions, an example in which the network device is referred to as a base station is used. Currently, for example, some network devices are a gNB, a transmission reception point (transmission reception point, TRP), an evolved NodeB (evolved NodeB, eNB), a radio network controller (radio network controller, RNC), a NodeB (NodeB, NB), a base station controller (base station controller, BSC), a base transceiver station (base transceiver station, BTS), a home base station (for example, a home evolved NodeB or a home NodeB, HNB), a baseband unit (base band unit, BBU), or a wireless fidelity (wireless fidelity, Wi-Fi) access point (access point, AP). In addition, in a network structure, the network device may include a centralized unit (centralized unit, CU) node and a distributed unit (distributed unit, DU) node. In this structure, protocol layers of an eNB in a long term evolution (long term evolution, LTE) system are separated, where functions of some protocol layers are centrally controlled by the CU, functions of some or all of remaining protocol layers are distributed in the DU, and the CU centrally controls the DU. (3) An RA procedure may also be referred to as a RACH procedure.

There are two possible manners of the RA procedure: a contention-based RA procedure and a contention-free RA procedure, as shown in FIG. 2(a) and FIG. 2(b). The base station sends a configuration message (which may also be referred to as an RA configuration message) to the UE, and the UE determines, based on the configuration message, an available physical time-frequency resource, namely, a physical random access channel (physical random access channel, PRACH) resource, which is also referred to as a PRACH occasion (PRACH Occasion, RO). When the contention-based (contention-based) RA procedure is used, as shown in FIG. 2(a), the UE sends a random access preamble (preamble) to the base station on an available PRACH time-frequency resource. After receiving the preamble, the base station sends a random access response (random access response, RAR) to the UE, where the RAR may include parameters such as the random access preamble, an uplink data timing advance (time advance, TA), an uplink resource used to send uplink data, and a cell radio network temporary identifier (cell radio network temporary identifier, C-RNTI), so that the UE sends the uplink data to the base station according to an indication of the RAR. The base station receives the uplink data and sends a contention resolution message to the UE. The contention-based RA procedure is also referred to as a four-step RA procedure. When the contention-free (contention-free) RA procedure is used, as shown in FIG. 2(b), the base station sends an RA indication message to the UE. The RA indication message usually includes a random access preamble allocated to the UE and a PRACH time-frequency resource used for sending the random access preamble. The UE sends the preamble according to the RA indication message, and the base station sends an RAR to the UE after receiving the preamble. The RAR may include parameters such as an uplink data timing advance (time advance, TA), an uplink resource used to send uplink data, a cell radio network temporary identifier (cell radio network temporary identifier, C-RNTI), and a preamble (same as the received preamble). The RA indication message may be sent to the UE by using a downlink control channel or higher layer signaling. The uplink resource may be a physical uplink shared channel (physical uplink shared channel, PUSCH) time-frequency resource. (4) Two-step random access.

The foregoing four-step RA procedure has a relatively high delay because signaling exchange is performed between the UE and the base station for a plurality of times. For some application scenarios with low delay requirements, a two-step RA procedure is proposed to reduce a delay, as shown in FIG. 3 (a) and FIG. 3(b). For an RA procedure of contention access, as shown in FIG. 3 (a), the UE sends a MsgA to the base station, where the MsgA may include two parts: a random access preamble and an uplink signal, and is equivalent to ① and ③ in the four-step RA procedure. After receiving the MsgA, the BS sends a MsgB to the UE, where the MsgB is used to send a random access response and contention resolution, and is equivalent to ② and ④ in the four-step RA procedure. The two-step RA procedure may also be used for contention-free access, as shown in FIG. 3(b). (5) Uplink time adjustment.

As shown in FIG. 4(a), because there is a delay in signal propagation between the base station and the UE, an interval between a start moment of sending a downlink signal by the base station a start time of receiving the downlink signal by UE1 is $\Delta T_1 = d_1/c$, where $d_1$ is a distance between the base station and the UE 1, and c is a signal propagation speed. For wireless communication, c is the speed of light. Similarly, $\Delta T_2 = d_2/c$, where $d_2$ is a distance between the base station and UE 2. If the UE 1 does not perform uplink timing adjustment, the UE1 sends an uplink signal to the base station with reference to a start moment of receiving the downlink signal, and an interval between a start moment of sending the uplink signal by the UE1 and a start moment of receiving the uplink signal by the base station is also $\Delta T_1$. Therefore, for the UE 1, there is a time difference $2\Delta T_1$ between the start moment of sending the downlink signal by the base station and the start moment of receiving the uplink signal by the base station. Similarly, for UE2, there is a time difference $2\Delta T_2$ between the start moment of sending the downlink signal by the base station and the start moment of receiving the uplink signal by the base station. Because distances between the UEs and the base station are different, time when the uplink signal arrives at the base station is different. As a result, there may be a timing offset between the UEs. However, when the timing offset is greater than a cyclic prefix (cyclic prefix, CP) of an orthogonal frequency division multiplexing (orthogonal frequency division multiplexing, OFDM) symbol, the UEs interfere with each other.

To resolve a problem of interference between the UEs, the UEs need to perform timing adjustment, which is also referred to as timing advance (timing advance, TA). As shown in FIG. 4(b), the UE 1 advances a start moment of sending an uplink signal by $2\Delta T_1$, and the UE 2 advances a start moment of sending an uplink signal by $2\Delta T_2$. In this case, the base station receives the uplink signals of the UE 1 and the UE 2 simultaneously. Therefore, the problem of mutual interference between the UEs is resolved. In a random access procedure, the base station sends a TA to the UE in a random access response, and the UE performs timing adjustment based on the TA. When a distance between the UE and the base station changes, timing adjustment needs to be performed accordingly. For the four-step RA, when sending an uplink signal, the UE performs timing adjustment based on a TA fed back by the base station in the RAR. Therefore, generally, there is no interference between the UEs.

It should be understood that, in a process of uplink signal transmission performed by the UE, the base station may send a timing advance command to the UE, to adapt to a case in which a TA changes after the UE moves. The UE restarts a TA timer each time after receiving a timing advance command.

For the two-step RA, a manner in which TA adjustment is not performed on the preamble and the uplink data part in the MsgA is used. In this case, there may be a relatively large timing offset between uplink data parts sent by different UEs, and there is relatively strong interference between the UEs. In another manner, when the TA of the UE is valid, TA adjustment may be performed on the preamble and uplink data part in the MsgA, or TA adjustment may be performed only on the uplink data part, to reduce interference between the uplink data parts. When TAs of only some UEs are valid in a network, there may be interference between uplink data transmission of UEs with invalid TAs and uplink data transmission of UEs with valid TAs.

To resolve a problem that there may be interference between uplink data transmission of UEs with invalid TAs and uplink data transmission of UEs with valid TAs, embodiments of this application provide a random access method and apparatus, and specifically provide the following two possible implementations:

In a first implementation, random access resource sets (including a PRACH resource and a PUSCH resource) are separately configured for a case in which a TA is valid and a case in which a TA is invalid.

In a second possible implementation, random access resource sets are separately configured for different TA accuracy levels.

The following describes in detail a specific implementation of the first implementation, as shown in FIG. 5.

S501: A base station sends configuration information, and UE receives the configuration information sent by the base station.

The configuration information is used to configure a first random access resource set and a second random access resource set, where the first random access resource set includes at least one physical random access channel PRACH time-frequency resource, at least one random access preamble, and at least one PUSCH time-frequency resource, and the second random access resource set includes at least one PRACH time-frequency resource, at least one random access preamble, and at least one PUSCH time-frequency resource.

For example, the configuration information is used to configure the first random access resource set and the second random access resource set. A manner is to implicitly indicate that a resource in the first random access resource set is used to perform random access when a TA is valid, and a resource in the second random access resource set is used to perform random access when the TA is invalid. For example, whether a resource in a random access resource set is used to perform random access when a TA is valid or used to perform random access when the TA is invalid is determined based on different coding bit sequences; whether a resource in a random access resource set is used to perform random access when a TA is valid or used to perform random access when the TA is invalid is determined based on different formats; or whether a resource in a random access resource set is used to perform random access when a TA is valid or used to perform random access when the TA is invalid is determined based on a resource configuration sequence. Another manner is to explicitly indicate that a resource in the first random access resource set is used to perform random access when a TA is valid, and a resource in the second random access resource set is used to perform random access when the TA is invalid. For example, an indication field is used. When the indication field is filled with 0, it indicates that the resource is used to perform random access when the TA is invalid; and when the indication field is filled with 1, it indicates that the resource is used to perform random access when the TA is valid. It may alternatively be specified in the protocol that a resource in the first random access resource set is used when the TA is valid, and a resource in the second random access resource set is used when the TA is invalid.

It should be noted that, in the embodiments of this application, a PRACH time-frequency resource may also be referred to as a PRACH occasion (PRACH occasion, RO), and a PUSCH time-frequency resource may also be referred to as a PUSCH occasion (PUSCH occasion, PO).

In an example, the configuration information may be sent by using a broadcast message, a multicast message, a UE-specific radio resource control (radio resource control, RRC) message, or another RRC configuration message.

For example, the configuration information may be carried in a master information block (master information block, MIB) or a system information block (system information block, SIB), and is sent by using a broadcast message or a multicast message.

In this embodiment of this application, that the base station configures the first random access resource set and the second random access resource set may be understood as that the base station separately configures a PRACH time-frequency resource, a random access preamble, and a PUSCH time-frequency resource that are used to perform random access when the TA is valid, and a PRACH time-frequency resource, a random access preamble, and a PUSCH time-frequency resource that are used to perform random access when the TA is invalid.

It should be understood that, one, two, or three of the PRACH time-frequency resource, the random access preamble, and the PUSCH time-frequency resource that are corresponding to the invalid TA may be different from that or those corresponding to the valid TA.

The following describes examples of correspondences between three types of resources corresponding to the invalid TA and three types of resources corresponding to the valid TA.

First example:

The base station configures the PRACH time-frequency resource and the PUSCH time-frequency resource that are used to perform random access when the TA is invalid, and the PRACH time-frequency resource and the PUSCH time-frequency resource that are used to perform random access when the TA is valid separately.

For example, PRACH time-frequency resources that are used to perform random access when the TA is invalid may be completely different from PRACH time-frequency resources that are used to perform random access when the TA is valid. In other words, any PRACH time-frequency resource included in the first random access resource set is different from any PRACH time-frequency resource included in the second random access resource set.

For ease of description, one or more PRACH time-frequency resources that are used to perform random access when the TA is valid are referred to as a first PRACH time-frequency resource set. One or more PRACH time-frequency resources that are used to perform random access when the TA is invalid are referred to as a second PRACH time-frequency resource set. That is, in the first example, all PRACH time-frequency resources included in the first PRACH time-frequency resource set are different from all PRACH time-frequency resources included in the second PRACH time-frequency resource set.

For example, the first PRACH time-frequency resource set includes two resources, an RO #0 and an RO #1, and the second PRACH time-frequency resource set includes two resources, an RO #2 and an RO #3. It should be noted that a quantity of configured PRACH time-frequency resources that are used to perform random access when the TA is valid may be the same as or different from a quantity of configured PRACH time-frequency resources that are used to perform random access when the TA is invalid. This is not specifically limited in this embodiment of this application. In an example, one PRACH time-frequency resource may be corresponding to one or more preambles. For example, one PRACH time-frequency resource is corresponding to 64 preambles. In another example, different preambles have different functions, the preambles may be divided into a plurality of preamble groups, one PRACH time-frequency resource may be corresponding to one or more preamble groups, and one preamble group may include one or more preambles.

It should be noted that the preamble corresponding to each PRACH time-frequency resource in the first PRACH time-frequency resource set may be the same as or different from the preamble corresponding to each PRACH time-frequency resource in the second PRACH time-frequency resource set. For example, the RO 0, the RO 1, the RO 2, and the RO 3 are each corresponding to 64 preambles. For another example, the RO 0 and the RO 1 are each corresponding to a preamble 1 to a preamble 32, and the RO 2 and the RO 3 are each corresponding to a preamble 33 to a preamble 64.

For example, PUSCH time-frequency resources that are used to perform random access when the TA is invalid are completely different from PUSCH time-frequency resources that are used to perform random access when the TA is valid. One or more PUSCH time-frequency resources that are used to perform random access when the TA is valid are referred to as a first PUSCH time-frequency resource set, and one or more PUSCH time-frequency resources that are used to perform random access when the TA is invalid are referred to as a second PUSCH time-frequency resource set. That is, any PUSCH time-frequency resource in the first PUSCH time-frequency resource set is different from any PUSCH time-frequency resource in the second PUSCH time-frequency resource set.

There is a mapping relationship between a PUSCH time-frequency resource and a PRACH time-frequency resource. To be specific, the first PRACH time-frequency resource set is corresponding to the first PUSCH time-frequency resource set, and the second PRACH time-frequency resource set is corresponding to the second PUSCH time-frequency resource set. For example, the first PRACH time-frequency resource set includes two PRACH time-frequency resources, an RO 0 and an RO 1, and the second PRACH time-frequency resource set includes two PRACH time-frequency resources, an RO 2 and an RO 3. The first PUSCH time-frequency resource set includes one PUSCH time-frequency resource, a PO 0, and the second PUSCH time-frequency resource set includes one PUSCH time-frequency resource, a PO 1. As shown in FIG. 6A, both the RO 0 and the RO 1 are corresponding to the PO 0, and both the RO 2 and the RO 3 are corresponding to the PO 1.

Second example: Any random access preamble in the first random access resource set is different from any random access preamble in the second random access resource set.

All PRACH time-frequency resources that are used to perform random access when the TA is invalid may be in a one-to-one correspondence with all PRACH time-frequency resources that are used to perform random access when the TA is valid.

In other words, the base station configures one PRACH time-frequency resource set, where the PRACH time-frequency resource set is used to perform random access when the TA is invalid, and is also used to perform random access when the TA is valid. The PRACH time-frequency resource set may include one or more PRACH resources. The PRACH time-frequency resource set is corresponding to two preamble groups, for example, a group 1 and a group 2, and each preamble group includes one or more preambles. Quantities of preambles included in the group 1 and the group 2 may be the same or may be different. All preambles included in the group 1 are completely different from all preambles included in the group 2. For example, the group 1 includes a preamble 1 to a preamble 32, and the group 2 includes a preamble 33 to a preamble 64. In two preamble groups, a preamble in the group 1 is used to perform random access when the TA is valid, and a preamble in the group 2 is used to perform random access when the TA is invalid. That is, any random access preamble in the first random access resource set is different from any random access preamble in the second random access resource set.

For example, PUSCH time-frequency resources that are used to perform random access when the TA is invalid are completely different from PUSCH time-frequency resources that are used to perform random access when the TA is valid. One or more PUSCH time-frequency resources that are used to perform random access when the TA is valid are referred to as a first PUSCH time-frequency resource set, and one or more PUSCH time-frequency resources that are used to perform random access when the TA is invalid are referred to as a second PUSCH time-frequency resource set. That is, any PUSCH time-frequency resource in the first PUSCH time-frequency resource set is different from any PUSCH time-frequency resource in the second PUSCH time-frequency resource set.

There is a mapping relationship between a preamble group and a PUSCH time-frequency resource set. For example, referring to FIG. 6B, the group 1 is corresponding to a first PUSCH time-frequency resource set (a PO #0), and the group 2 is corresponding to a second PUSCH time-frequency resource set (a PO #1).

Third example: A PRACH time-frequency resource and a random access preamble that are used to perform random access when the TA is invalid are not distinguished from a PRACH time-frequency resource and a random access preamble that are used to perform random access when the TA is valid, and may all be the same. However, a configured PUSCH time-frequency resource that is used to perform random access when the TA is invalid is different from a configured PUSCH time-frequency resource that is used to perform random access when the TA is valid.

For example, the base station configures one PRACH time-frequency resource set, where the PRACH time-frequency resource set is used to perform random access when the TA is invalid, and is also used to perform random access when the TA is valid. The PRACH time-frequency resource set may include one or more PRACH resources. All PRACH time-frequency resources in the PRACH time-frequency resource set may be corresponding to a same preamble or different preambles. These preambles may be used to perform random access when the TA is invalid, and also be used to perform random access when the TA is valid. The base station configures two PUSCH time-frequency resource sets: a first PUSCH time-frequency resource set and a second PUSCH time-frequency resource set, the first PUSCH time-frequency resource set is used to perform random access when the TA is valid, and the second PU SCH time-frequency resource set is used to perform random access when the TA is invalid.

In the third example, in a manner, there is a correspondence between the PRACH time-frequency resource set and each of the two PUSCH time-frequency resource sets. In another manner, one preamble is corresponding to the two PUSCH time-frequency resource sets. Referring to FIG. 6C, the PRACH time-frequency resource set includes an RO 0, the first PUSCH time-frequency resource set includes a PO 0, the second PUSCH time-frequency resource set includes a PO 1, and the PRACH time-frequency resource set is corresponding to the first PUSCH time-frequency resource set and the second PUSCH time-frequency resource set. That is, the RO 0 is corresponding to the PO 0 and the PO 1.

It should be understood, in this embodiment of this application, that different PUSCH time-frequency resources mean that PUSCHs occupy different time domain resources, different frequency domain resources, or different time domain resources and different frequency domain resources; and different PRACH time-frequency resources mean that PRACHs occupy different time domain resources, different frequency domain resources, or different time domain resources and different frequency domain resources.

In a possible example, a value set of a configuration parameter associated with a PUSCH time-frequency resource included in the first random access resource set is different from a value set of a configuration parameter associated with a PUSCH time-frequency resource included in the second random access resource set. The value set herein may include a plurality of specific values, or include a value range.

The configuration parameter includes at least one of a modulation and coding scheme (modulation and coding scheme, MCS), a cyclic prefix (cyclic prefix, CP), an uplink control information parameter, and a power control parameter. The uplink control information parameter may include a quantity of bits of uplink control information (uplink control information, UCI), a time-frequency resource position and size of the uplink control information, and the like. For example, the configuration parameter may be specified in a protocol or configured by the base station.

For example, an MCS value range configured for the PU SCH time-frequency resource when the TA is valid is different from an MCS value range configured for the PUSCH time-frequency resource when the TA is invalid.

For example, because a timing offset between UEs with valid TAs may be configured within a CP range, the MCS, transmit power, and the uplink control information parameter that are configured for the PUSCH time-frequency resource when the TA is valid or invalid satisfy at least one of the following conditions, to improve data transmission efficiency:

an MCS value range configured for the PUSCH time-frequency resource when the TA is valid is greater than an MCS value range configured for the PUSCH time-frequency resource when the TA is invalid;

transmit power configured for the PUSCH time-frequency resource when the TA is valid is greater than transmit power configured for the PUSCH time-frequency resource when the TA is invalid;

a quantity of bits of uplink control information that is configured for the PUSCH time-frequency resource when the TA is valid is greater than a quantity of bits of uplink control information that is configured for the PUSCH time-frequency resource when the TA is invalid; or

a time-frequency resource size of uplink control information configured for the PUSCH time-frequency resource when the TA is valid is greater than a time-frequency resource size of uplink control information configured for the PUSCH time-frequency resource when the TA is invalid.

S502: The UE determines whether a TA is valid when random access is initiated. If the TA is valid, S503 is performed; or if the TA is invalid, S504 is performed.

For example, the UE may determine, in any one of the following manners, whether the TA is valid.

First manner:

The UE can determine whether the TA is valid based on a TA timer. If the TA timer does not expire, the TA of the UE is valid. If the TA timer expires, the TA of the UE is invalid. Usually, the UE receives an uplink timing advance command delivered by the base station, and the UE adjusts the TA based on the timing advance command and restarts the TA timer.

A length of the TA timer may be configured by the base station. In a manner, a TA timer length (or referred to as TA timing duration) configured by the base station for each UE is the same. In another manner, the base station may configure the length of the TA timer for the UE based on a TA adjustment capability (which may also be referred to as a TA tracking capability) of the UE. For example, the UE supports tracking and adjusting a current TA based on a downlink signal and/or position information of the UE. The downlink signal may be a downlink reference signal or a synchronization signal. The position information of the UE may be a distance between the UE and the base station. The UE sends a first indication to the base station, where the first indication is used to indicate that the UE has a TA tracking capability, and the TA tracking capability indicates that the UE supports tracking and adjusting a TA based on a received downlink signal and position information of the UE. After receiving the first indication, the base station sends a second indication to the UE based on the first indication, where the second indication is used to indicate TA timing duration configured by the base station for the UE based on the first indication. That is, the timing duration of the TA timer is configured for the UE.

In an example, a parameter used to indicate the TA tracking capability may include at least one of the following:

a TA accuracy level of the UE, duration for tracking and adjusting the TA of the UE, and a time interval of tracking and adjusting of the TA of the UE.

For example, a TA accuracy level carried in the first indication may be a factory parameter of the UE, or be notified by an operator by using signaling. For example, the operator may notify the terminal device by using preconfigured signaling, or the operator may write preconfigured signaling into a subscriber identification module (subscriber identification module, SIM) or global subscriber identity module (universal subscriber identity module, USIM) of the terminal, and the terminal device may obtain the preconfigured signaling by reading the SIM or the USIM.

The TA accuracy level carried in the first indication may alternatively be a TA accuracy level determined when previous random access is performed. For example, the TA accuracy level is determined based on startup duration of TA timing, signal strength of the received downlink signal, or based on the distance between the UE and the base station. For a specific determining manner, refer to Manner 1 to Manner 3 in the second possible implementation corresponding to FIG. 7. Details are not described herein.

Accuracy of the TA indicates a value of an error between an adjusted TA (where "adjusted" herein means adjusted by the UE or the base station) and an accurate TA value. A higher TA accuracy level indicates a smaller error between the adjusted TA and the accurate TA value.

For example, a mapping relationship between the parameter used to indicate the TA tracking capability and the TA timing duration may be configured in the base station, so that the base station may configure the TA timing duration for the UE based on the first indication reported by the UE and the mapping relationship.

A higher TA accuracy level of the UE is corresponding to longer TA timing duration, a longer duration for tracking and adjusting the TA of the UE is corresponding to longer TA timing duration, or a shorter time interval of tracking and adjusting the TA of the UE is corresponding to longer TA timing duration.

Second manner:

The UE has a capability of adjusting the TA, and the TA of the UE is valid.

When the UE has a TA tracking capability, the UE may notify the base station. In a possible manner, the base station may configure timing duration of the TA timer to be infinite. If the timing duration is configured to be infinite, the TA of the UE is always valid. In addition, the UE has the TA tracking capability. When the UE performs TA tracking, the TA timer may be interrupted, or impact of timeout of the TA timer may not be considered, to determine that the TA of the UE is valid.

Third manner: A time difference between time when random access is performed and time when a previous TA is adjusted is less than a preset threshold.

It should be noted that the time when random access is performed may be a start position for sending a random access preamble by the UE or a slot in which the start position is located, or may be a start position for sending a PUSCH by the UE or a slot in which the start position is located, or may be a moment at which a random access procedure is initiated inside the terminal device or a slot in which the moment is located.

For example, the time of the previous TA adjustment may be time of previously receiving a TA indicated by the network device, or time for previously tracking and adjusting the TA.

S503: The UE sends a first random access preamble and first uplink data to the network device by using a resource in the first random access resource set.

The first random access preamble is a random access preamble in the first random access resource set, the first random access preamble is carried on a first PRACH time-frequency resource in the first random access resource set, and the first uplink data is carried on a first PUSCH time-frequency resource.

S504: The UE sends a second random access preamble and second uplink data to the network device by using a resource in the second random access resource set.

The second random access preamble is a random access preamble in the first random access resource set, the second random access preamble is carried on a second PRACH time-frequency resource in the second random access resource set, and the second uplink data is carried on a second PUSCH time-frequency resource in the second random access resource set.

In this embodiment of this application, the random access preamble (the first random access preamble or the second random access preamble) and the uplink data (the first uplink data or the second uplink data) may be carried in a MsgA for sending.

During two-step random access, the UE selects a PRACH time-frequency resource, a random access preamble, and a PUSCH time-frequency resource based on whether the TA is valid.

In a possible implementation, there is a mapping relationship between a synchronization signal block (synchronization signal block, SSB) and a PRACH time-frequency resource. A given quantity of SSBs are mapped to each PRACH time-frequency resource. When selecting a PRACH resource, the UE may select at least one SSB whose reference signal received power (Reference signal received power, RSRP) is greater than a preset threshold, and then select the PRACH resource from at least one PRACH resource associated with the SSB. For example, in the first example of the resource relationship, the UE determines that the TA is valid, determines SSBs whose RSRP is greater than the preset threshold, for example, an SSB 0 and an SSB 1, then determines PRACH time-frequency resources that are in the first PRACH time-frequency resource set and to which the SSB 0 and the SSB 1 are mapped, and selects a PRACH time-frequency resource from the determined PRACH time-frequency resources. When the UE performs contention-based two-step random access, the UE selects a preamble from at least one preamble corresponding to the selected PRACH time-frequency resource. Then, based on the mapping relationship between a PRACH time-frequency resource and a PUSCH time-frequency resource, the first PUSCH time-frequency resource is selected from the first PUSCH time-frequency resource set to carry the uplink data. When the UE performs contention-free two-step random access, the UE determines a PRACH time-frequency resource and a preamble based on an RA indication message, and then determines a corresponding PUSCH resource based on the determined PRACH time-frequency resource. The UE sends the MsgA to the base station on the selected PRACH time-frequency resource and PUSCH time-frequency resource.

In a possible implementation, when the TA of the UE is valid, TA adjustment may be performed on both sending time of the random access preamble and sending time of the uplink data based on the valid TA; otherwise, when the TA is invalid, the TA may be set to 0. To be specific, TA adjustment is not performed for the random access preamble and the uplink data.

Specifically, when S503 is performed, the sending time of the random access preamble may be determined based on the valid TA and a time domain position of the first PRACH time-frequency resource, the sending time of the uplink data may be determined based on the valid TA and a time domain position of the first PUSCH time-frequency resource, and the first random access preamble and the first uplink data are sent to the base station based on the determined sending time of the first random access preamble and the determined sending time of the first uplink data.

In another possible implementation, when the TA of the UE is valid, TA adjustment may be performed on sending time of the uplink data based on only the valid TA; otherwise, when the TA is invalid, the TA may be set to 0. To be specific, TA adjustment is not performed for the random access preamble and the uplink data.

Specifically, when S503 is performed, sending time of the first random access preamble is determined based on a time domain position of the first PRACH time-frequency resource, sending time of the first uplink data is determined based on the valid TA and a time domain position of the first PUS CH time-frequency resource, and the first random access preamble and the first uplink data are sent to the base station based on the determined sending time of the first random access preamble and the determined sending time of the first uplink data.

In an example, the valid TA may be a TA indicated by the base station, or may be a TA value that is sent by the base station and that is received in a previous random access procedure.

In another example, the UE determines a TA value based on the downlink signal or position information. The UE has the TA tracking capability. The UE tracks, based on the downlink reference signal or synchronization signal, a TA value after adjusting the TA, or tracks, based on the distance between the UE and the base station, a TA value after adjusting the TA. When the TA is adjusted, tracking and adjustment may be performed based on the TA indicated by the base station, and tracking and adjustment may be performed again based on a previous TA that is tracked and adjusted. It should be understood that the TA may be adjusted and updated each time. For whether the TA is updated based on the TA indicated by the base station or updated based on a previous TA that is tracked and adjusted, the TA is updated again based on a latest updated TA.

After the UE sends the random access preamble (the first random access preamble or the second random access preamble) and the uplink data (the first uplink data or the second uplink data), S505 is performed.

S505: The base station detects the random access preamble and the uplink data based on the first random access resource set and the second random access resource set.

In a first possible implementation, in the different relationships of the three types of resources, manners of detecting the random access preamble and the uplink data by the base station are different.

In the first example, a first detection manner may be used.

Any PRACH time-frequency resource in the first random access resource set is different from any PRACH time-frequency resource in the second random access resource set. To be specific, the first PRACH time-frequency resource set and the first PUSCH time-frequency resource set have a mapping relationship, and are corresponding to the valid TA; and the second PRACH time-frequency resource set and the second PUSCH time-frequency resource set have a mapping relationship, and are corresponding to the invalid TA.

In the first detection manner, the UE detects the random access preamble on PRACH time-frequency resources included in the first PRACH time-frequency resource set and the second PRACH time-frequency resource set. When the first random access preamble is detected on the first PRACH time-frequency resource in the first random access resource set, the uplink data is detected on a plurality of PUSCH time-frequency resources in the first random access resource set. In other words, when the first random access preamble is detected on the first PRACH time-frequency resource in the first PRACH time-frequency resource set, the uplink data is detected on the first PUSCH time-frequency resource set corresponding to the first PRACH time-frequency resource set. When the second random access preamble is detected on the second PRACH time-frequency resource in the second random access resource set, the uplink data is detected on a plurality of PUSCH time-frequency resources in the second random access resource set. In other words, when the second random access preamble is detected on the second PRACH time-frequency resource in the second PRACH time-frequency resource set, the uplink data is detected on the second PUSCH time-frequency resource set corresponding to the second PRACH time-frequency resource set.

In the second example, a second detection manner may be used.

Any random access preamble in the first random access resource set is different from any random access preamble in the second random access resource set. Each of the two preamble groups is corresponding to one PUSCH time-frequency resource set. A preamble group 1 is corresponding to the first PUSCH time-frequency resource, and is corresponding to the valid TA. A preamble group 2 is corresponding to the second PUSCH time-frequency resource, and is corresponding to the invalid TA. A PRACH time-frequency resource set used when the TA is valid is the same as that used when the TA is invalid.

In the second detection manner, the UE detects the preamble on the PRACH time-frequency resource sets. When the first random access preamble is detected, the first random access preamble is one of a plurality of random access preambles included in the first random access resource set, and the uplink data is detected on a plurality of PUSCH time-frequency resources in the first random access resource set. When the second random access preamble is detected, the second random access preamble is one of a plurality of random access preambles included in the second random access resource set, and the uplink data is detected on a plurality of PUSCH time-frequency resources in the second random access resource set. In other words, when the detected preamble belongs to the preamble group 1, the uplink data is detected on the PUSCH time-frequency resource included in the first PUSCH time-frequency resource set corresponding to the preamble group 1; and when the detected preamble belongs to the preamble group 2, the uplink data is detected on the PUSCH time-frequency resource included in the second PUSCH time-frequency resource set corresponding to the preamble group 2.

In the third example, a third detection manner may be used.

A PRACH time-frequency resource and a random access preamble that are used to perform random access when the TA is invalid are not distinguished from a PRACH time-frequency resource and a random access preamble that are used to perform random access when the TA is valid, and may all be the same. However, a configured PUSCH time-frequency resource that is used to perform random access when the TA is invalid is different from a configured PUSCH time-frequency resource that is used to perform random access when the TA is valid.

In a third detection manner, when detecting the random access preamble and the uplink data, the base station detects the random access preamble on the PRACH time-frequency resource sets configured by the base station. When the first random access preamble is detected, based on PUSCH time-frequency resources corresponding to the PRACH time-frequency resource carrying the first random access preamble, the first random access preamble is corresponding to two PUSCH time-frequency resource sets. Therefore, the uplink data is detected on PUSCH time-frequency resources included in the corresponding two PUSCH time-frequency resource sets.

In a possible implementation, after detecting the random access preamble and the uplink data, in response to the random access preamble and the uplink data, the base station sends a timing advance command. When the random access preamble and the uplink data are detected based on the first random access resource set, the timing advance command carries a TA adjustment value; and when the random access preamble and the uplink data are detected based on the second random access resource set, the timing advance command carries a TA value.

For example, the uplink data is detected on a PUSCH time-frequency resource included in the first PUSCH time-frequency resource set. Because the first PUSCH time-frequency resource set is used to perform random access when the TA is valid, it is determined that the UE performs TA adjustment when sending the uplink data, so that the TA adjustment value is sent in the timing advance command. When the uplink data is detected on a PUSCH time-frequency resource included in the second PUSCH time-frequency resource set, because the second PUSCH time-frequency resource set is used to perform random access when the TA is invalid, it is determined that the UE does not perform TA adjustment when sending the uplink data, so that the base station sends the TA value in the timing advance command. Formats of the timing advance command carrying the TA adjustment value and the timing advance command carrying the TA value may be different. For example, quantities of occupied bits are different. Alternatively, the timing advance command includes an indication field, and a value included in the indication field is used to indicate the TA adjustment value or the TA value, or indicate whether the value is the TA adjustment value or the TA value. For example, 1 bit is used to indicate whether the value is the TA adjustment value or the TA value, where a value of the bit being 1 indicates that the value is the TA adjustment value, and the value of the bit being 0 indicates that the value is the TA value.

In this embodiment of this application, the base station may send the timing advance command in the MsgB message. For example, a manner in which the UE determines, after receiving the timing advance command, to update the TA based on the TA adjustment value and TA value carried in the timing advance command may vary.

Manner 1: The UE receives the timing advance command; and if the timing advance command carries the TA adjustment value, the UE adjusts a value of the TA based on the valid TA and the TA adjustment value.

For example, when the UE adjusts the value of the valid TA, the timing advance command notifies the TA adjustment value $T_A$, and the UE performs the following TA adjustment based on the timing advance command:

$$N_{TA_new} = N_{TA_old} + (T_A - 31) \cdot 16 \cdot 64/2^{\mu},$$

where $N_{TA_new}$ is a TA value after adjustment, $N_{TA_old}$ is the valid TA value before adjustment, and $\mu$ is a parameter related to a subcarrier spacing.

Manner 2: The UE receives the timing advance command, where the timing advance command carries the TA value; and the UE uses the TA value as a new valid TA value.

For example, when the TA is invalid when the UE performs random access, that is, TA=0, the timing advance command notifies the TA value, and the UE performs the following TA adjustment based on the timing advance command:

$$N_{TA} = T_A \cdot 16 \cdot 64/2^{\mu},$$

where $N_{TA}$ is a TA value after adjustment, and $\mu$ is a parameter related to a subcarrier spacing.

The following describes in detail a specific implementation of the second possible implementation, as shown in FIG. 7.

S701: A base station sends configuration information, and UE receives the configuration information sent by the base station.

The configuration information is used to configure a plurality of random access resource sets, each of the plurality of random access resource sets is corresponding to one timing advance TA accuracy level, random access resource sets corresponding to different TA accuracy levels are different, and each of the plurality of random access resource sets includes at least one physical random access channel PRACH time-frequency resource, at least one random access preamble, and at least one physical uplink shared channel PUSCH time-frequency resource.

A plurality of TA accuracy levels may be configured, for example, two or more TA accuracy levels.

In an example, the configuration information may be sent by using a broadcast message, a multicast message, or a UE-specific RRC message.

For example, the configuration information may be carried in a MIB or a SIB, and is sent by using a broadcast message or a multicast message.

In this embodiment of this application, that the base station configures a plurality of random access resource sets may be understood as that the base station separately configures a PRACH time-frequency resource, a random access preamble, and a PUSCH time-frequency resource that are corresponding to each of the TA accuracy levels.

It should be understood that, one, two, or three of the PRACH time-frequency resource, the random access preamble, and the PUSCH time-frequency resource that are corresponding to an accuracy level may be different from that or those corresponding to a different accuracy level.

The following examples describe correspondences between three types of resources corresponding to the different TA accuracy levels. Three TA accuracy levels, a TA accuracy level 1, a TA accuracy level 2, and a TA accuracy level 3, are used as an example. The TA accuracy level 1 is corresponding to a random access resource set 1, the TA accuracy level 2 is corresponding to a random access resource set 2, and the TA accuracy level 3 is corresponding to a random access resource set 3.

First example:

PRACH time-frequency resources and PUSCH time-frequency resources used by the base station to perform random access based on different TA accuracy levels are separately configured.

For example, PRACH time-frequency resources included in different random access resource sets are different. In other words, at the different TA accuracy levels, different PRACH time-frequency resources are used to perform random access. For example, PRACH time-frequency resources included in the random access resource set 1, the random access resource set 2, and the random access resource set 3 are completely different.

In the first example, for ease of description, one or more PRACH time-frequency resources used for random access at the TA accuracy level 1 are referred to as a PRACH time-frequency resource set 1, one or more PRACH time-frequency resources used for random access at the TA accuracy level 2 are referred to as a PRACH time-frequency resource set 2, and one or more PRACH time-frequency resources used for random access at the TA accuracy level 3 are referred to as a PRACH time-frequency resource set 3. That is, in the first example, all PRACH time-frequency resources included in the PRACH time-frequency resource set 1, all PRACH time-frequency resources included in the PRACH time-frequency resource set 2, and all PRACH time-frequency resources included in the PRACH time-frequency resource set 3 are completely different.

For example, the PRACH time-frequency resource set 1 includes two resources, an RO 0 and an RO 1, the PRACH time-frequency resource set 2 includes two resources, an RO 2 and an RO 3, and the PRACH time-frequency resource set 3 includes one resource, an RO #4. It should be noted that, at the different TA accuracy levels, quantities of PRACH time-frequency resources used for random access may be the same or different. This is not specifically limited in this embodiment of this application.

In an example, one PRACH time-frequency resource may be corresponding to one or more preambles. For example, one PRACH time-frequency resource is corresponding to 64 preambles. In another example, different preambles have different functions, the preambles may be divided into a plurality of preamble groups, one PRACH time-frequency resource may be corresponding to one or more preamble groups, and one preamble group may include one or more preambles.

It should be noted that random access preambles included in the random access resource sets corresponding to the different TA accuracy levels may be the same or may be different. For example, the preamble corresponding to each PRACH time-frequency resource in the PRACH time-frequency resource set 1 may be the same as or different from the preamble corresponding to each PRACH time-frequency resource in the PRACH time-frequency resource set 2. For example, the RO 0, the RO 1, the RO 2, the RO 3, and the RO 4 are each corresponding to 64 preambles. For another example, the RO 0 and the RO 1 are each corresponding to a preamble 1 to a preamble 32, the RO 2 and the RO 3 are each corresponding to a preamble 33 to a preamble 64, and the RO 4 is corresponding to the preamble 32 to a preamble 50. For another example, the RO 0 and the RO 1 are each corresponding to a preamble 1 to a preamble 30, the RO 2 and the RO 3 are each corresponding to a preamble 31 to a preamble 55, and the RO 4 is corresponding to a preamble 56 to a preamble 64.

For example, the PUSCH time-frequency resources used for random access at the different TA accuracy levels may be completely different. For example, for ease of description, one or more PUSCH time-frequency resources used for random access at the TA accuracy level 1 are referred to as a PUSCH time-frequency resource set 1, one or more PUSCH time-frequency resources used for random access at the TA accuracy level 2 are referred to as a PUSCH time-frequency resource set 2, and one or more PUSCH time-frequency resources used for random access at the TA accuracy level 3 are referred to as a PUSCH time-frequency resource set 3. In other words, any PUSCH time-frequency resource in the PUSCH time-frequency resource set 1, any PUSCH time-frequency resource in the PUSCH time-frequency resource set 2, and any PUSCH time-frequency resource in the PUSCH time-frequency resource set 3 are completely different.

In the first example, there is a mapping relationship between the PUSCH time-frequency resource and the PRACH time-frequency resource. To be specific, the PRACH time-frequency resource set 1 is corresponding to the PUSCH time-frequency resource set 1, the PRACH time-frequency resource set 2 is corresponding to the PUSCH time-frequency resource set 2, and the PRACH time-frequency resource set 3 is corresponding to the PUSCH time-frequency resource set 3. For example, the PRACH time-frequency resource set 1 includes two PRACH time-frequency resources, the RO 0 and the RO 1, the PRACH time-frequency resource set 2 includes two PRACH time-frequency resources, the RO 2 and the RO 3, and the PRACH time-frequency resource set 3 includes one PRACH time-frequency resource, the RO 4. The PUSCH time-frequency resource set 1 includes one PUSCH time-frequency resource, a PO 0, the PUSCH time-frequency resource set 2 includes one PUSCH time-frequency resource, a PO 1, and the PUSCH time-frequency resource set 3 includes one PUSCH time-frequency resource, a PO 2. As shown in FIG. 8A, both the RO 0 and the RO 1 are corresponding to the PO 0, both the RO 2 and the RO 3 are corresponding to the PO 1, and the RO 4 is corresponding to the PO 2.

Second example:

Random access preambles included in different random access resource sets are different.

For example, in the second example, that PRACH time-frequency resources used for random access at the different accuracy levels are the same is used as an example.

In other words, the base station configures a PRACH time-frequency resource set, where the PRACH time-frequency resource set is used for random access at the TA accuracy level 1, is used for random access at the TA accuracy level 2, and is also used for random access at the TA accuracy level 3. The PRACH time-frequency resource set may include one or more PRACH resources. The random access resource set 1, the random access resource set 2, and the random access resource set 3 each include the PRACH time-frequency resource set. The PRACH time-frequency resource set may be corresponding to three preamble groups, for example, a group (group) 1, a group 2, and a group 3, and each preamble group includes one or more preambles. Quantities of preambles included in the group 1, the group 2, and the group 3 may be the same or may be different. All preambles included in the group 1, all preambles included in the group 2, and all preambles included in the group 3 are completely different. For example, the group 1 includes a preamble 1 to a preamble 20, the group 2 includes a preamble 21 to a preamble 40, and the group 3 includes a preamble 41 to a preamble 64. In the three preamble groups, a preamble in the group 1 is used for random access at the TA accuracy level 1, a preamble in the group 2 is used for random access at the TA accuracy level 2, and a preamble in the group 3 is used for random access at the TA accuracy level 3. That is, the group 1 belongs to the random access resource set 1, the group 2 belongs to the random access resource set 2, and the group 3 belongs to the random access resource set 3.

For example, in the second example, PUSCH time-frequency resources used for random access at the different TA accuracy levels may be completely different. For example, for ease of description, one or more PUSCH time-frequency resources used for random access at the TA accuracy level 1 are referred to as a PUSCH time-frequency resource set 1, one or more PUSCH time-frequency resources used for random access at the TA accuracy level 2 are referred to as a PUSCH time-frequency resource set 2, and one or more PUSCH time-frequency resources used for random access at the TA accuracy level 3 are referred to as a PUSCH time-frequency resource set 3. That is, the PUSCH time-frequency resource set 1 belongs to the random access resource set 1, the PUSCH time-frequency resource set 2 belongs to the random access resource set 2, and the PUSCH time-frequency resource set 3 belongs to the random access resource set 3. Any PUSCH time-frequency resource in the PUSCH time-frequency resource set 1, any PUSCH time-frequency resource in the PUSCH time-frequency resource set 2, and any PUSCH time-frequency resource in the PUSCH time-frequency resource set 3 are completely different.

In the second example, there is a mapping relationship between the preamble group and the PUSCH time-frequency resource set. The group 1 is corresponding to the PUSCH time-frequency resource set 1 (including the PO 0), the group 2 is corresponding to the PUSCH time-frequency resource set 2 (including the PO 1), and the group 3 is corresponding to the PUSCH time-frequency resource set 3 (including the PO 2), as shown in FIG. 8B.

Third example: PRACH time-frequency resources and random access preambles that are used for random access at the different TA accuracy levels are not distinguished, and may all be the same, but configured PUSCH time-frequency resources that are used to perform random access at the different TA accuracy levels are different.

For example, the base station configures a PRACH time-frequency resource set, where the PRACH time-frequency resource set is used for random access at the TA accuracy level 1, is used for random access at the TA accuracy level 2, and is also used for random access at the TA accuracy level 3. The PRACH time-frequency resource set may include one or more PRACH resources. The random access resource set 1, the random access resource set 2, and the random access resource set 3 each include the PRACH time-frequency resource set. All PRACH time-frequency resources in the PRACH time-frequency resource set may be corresponding to a same preamble or different preambles. These preambles may be used to perform random access at the different TA accuracy levels. For example, in the third example, PUSCH time-frequency resources used for random access at the different TA accuracy levels may be completely different.

For example, for ease of description, one or more PUSCH time-frequency resources used for random access at the TA accuracy level 1 are referred to as a PUSCH time-frequency resource set 1, one or more PUSCH time-frequency resources used for random access at the TA accuracy level 2 are referred to as a PUSCH time-frequency resource set 2, and one or more PUSCH time-frequency resources used for random access at the TA accuracy level 3 are referred to as a PUSCH time-frequency resource set 3. That is, the PUSCH time-frequency resource set 1 belongs to the random access resource set 1, the PUSCH time-frequency resource set 2 belongs to the random access resource set 2, and the PUSCH time-frequency resource set 3 belongs to the random access resource set 3. Any PUSCH time-frequency resource in the PUSCH time-frequency resource set 1, any PUSCH time-frequency resource in the PUSCH time-frequency resource set 2, and any PUSCH time-frequency resource in the PUSCH time-frequency resource set 3 are completely different.

In a possible example, value sets of configuration parameters associated with PUSCH time-frequency resources included in different random access resource sets are different. For related descriptions of the configuration parameter, refer to the related descriptions in the first possible implementation. Details are not described herein again.

For example, MCS value ranges configured for the PUSCH time-frequency resources at the different TA accuracy levels are different.

In this embodiment of this application, a value set of a configuration parameter may be adjusted based on a TA accuracy level, so that more UEs are not affected by a timing offset. This improves data transmission efficiency. For example, a PUSCH resource corresponding to UE with a low TA accuracy level may be configured to be corresponding to an extended CP (Extended CP, ECP) or a predefined CP length, so that a timing offset between UEs falls within a CP range.

For example, an MCS, transmit power, and an uplink control information parameter that are configured for the PUSCH time-frequency resources at the different TA accuracy levels satisfy at least one of the following conditions, to improve data transmission efficiency:

an MCS value range configured for the PUSCH time-frequency resource at a high TA accuracy level is greater than an MCS value range configured for the PUSCH time-frequency resource at a low TA accuracy level;

transmit power configured for the PUSCH time-frequency resource at a high TA accuracy level is greater than transmit power configured for the PUSCH time-frequency resource at a low TA accuracy level;

a quantity of bits of uplink control information configured for the PUSCH time-frequency resource at a high TA accuracy level is greater than a quantity of bits of uplink control information configured for the PUSCH time-frequency resource at a low TA accuracy level; or

a time-frequency resource size of uplink control information configured for the PUSCH time-frequency resource at a high TA accuracy level is greater than a time-frequency resource size of uplink control information configured for the PUSCH time-frequency resource at a low TA accuracy level.

S702: The UE determines a TA accuracy level when random access is initiated.

For example, the UE may determine the TA accuracy level in any one of the following manners.

Manner 1:

The UE determines a TA accuracy level of the UE based on startup duration of a TA timer when random access is initiated, where one TA accuracy level is corresponding to one startup duration range, and different startup duration ranges do not overlap.

A length of the TA timer may be configured by the base station. If the UE receives an uplink timing advance command delivered by the base station, the UE adjusts the TA based on the timing advance command and restarts the TA timer. For example, there are K TA accuracy levels. In this case, K - 1 time thresholds $T_1$, $T_2$, ..., and $T_{K-1}$ may be set. It is assumed that a value $t$ obtained after the TA timer is reset increases from 0 over time. In this case, $t \leq T_1$ is corresponding to a first level of TA accuracy, $T_1 < t \leq T_2$ is corresponding to a second level of TA accuracy, and so on.

For example, the time threshold may change as timing duration changes.

It should be noted that when the timer expires, the TA of the UE is equal to 0. For example, $T_{k-1} < t$, it may be considered that the TA accuracy level of the UE is a $K^{th}$ level of TA accuracy, namely, the lowest TA accuracy level.

Manner 2:

When the UE performs TA estimation based on a downlink reference signal or a synchronization signal, the UE may determine a current TA accuracy level based on signal strength of the received downlink reference signal or synchronization signal. One TA accuracy level is corresponding to one signal strength range, and different signal strength ranges do not overlap.

For example, there are K TA accuracy levels. In this case, K - 1 signal strength thresholds $P_1$, $P_2$, ... , and $P_{K-1}$ may be set. Signal strength $p \leq P_1$ is corresponding to a $K^{th}$ level of TA accuracy, $P_1 < p \leq P_2$ is corresponding to a $(K-1)^{th}$ level of TA accuracy, and so on.

Manner 3:

When the UE performs TA estimation based on a distance between the UE and the base station, the UE may determine a current TA accuracy level based on distance estimation accuracy. One TA accuracy level is corresponding to one distance estimation accuracy range, and different distance estimation accuracy ranges do not overlap.

When the UE performs autonomous positioning, the UE estimates a position of the UE by measuring reference signals (or synchronization signals) sent by the base station and position information of the base station, and determines a distance between the UE and the base station based on a position estimation result. When the base station assists in positioning, the UE may feed back measurement results of the reference signals (or the synchronization signals) to the base station. After collecting the measurement results sent by the UE, the base station estimates the position of the UE, and sends a position estimation result and estimation accuracy to the UE. In the foregoing method, distance estimation accuracy is related to factors such as a position that is of the base station and that participates in distance estimation, and bandwidth and strength of the reference signals.

In a possible manner, if determining that the TA is invalid when random access is initiated, the UE may determine that the current TA is 0, and the TA accuracy level of the UE is currently the lowest.

For a manner of determining whether the TA is valid, refer to the related descriptions in the first possible implementation. Details are not described herein again.

S703: The UE sends a first random access preamble and first uplink data to the network device by using a resource in a random access resource set corresponding to the determined TA accuracy level.

The first random access preamble is a random access preamble in the random access resource set corresponding to the determined TA accuracy level, the first random access preamble is carried on a first PRACH time-frequency resource in the random access resource set corresponding to the determined TA accuracy level, and the first uplink data is carried on a first PUSCH time-frequency resource in the random access resource set corresponding to the determined TA accuracy level.

In this embodiment of this application, the random access preamble and the uplink data may be carried in a MsgA for sending.

In a possible example, there is a mapping relationship between an SSB and a PRACH time-frequency resource. A given quantity of SSBs are mapped to each PRACH time-frequency resource. When selecting a PRACH resource, the UE may select at least one SSB whose RSRP is greater than a preset threshold, and then select the PRACH resource from at least one PRACH resource associated with the SSB.

For example, in the first example of the resource relationship, the UE determines the TA accuracy level 1, determines SSBs whose RSRP is greater than the preset threshold, for example, an SSB 0 and an SSB 1, then determines PRACH time-frequency resources that are in the PRACH time-frequency resource set 1 and to which the SSB 0 and the SSB 1 are mapped, and selects a PRACH time-frequency resource from the determined PRACH time-frequency resources. When the UE performs contention-based two-step random access, the UE selects a preamble from at least one preamble corresponding to the selected PRACH time-frequency resource. Then, based on the mapping relationship between the PRACH time-frequency resource and the PUSCH time-frequency resource, a PUSCH time-frequency resource is selected from the PUSCH time-frequency resource set 1 to carry the uplink data. When the UE performs contention-free two-step random access, the UE determines a PRACH time-frequency resource and a preamble based on an RA indication message, and then determines a corresponding PUSCH resource based on the determined PRACH time-frequency resource.

The UE sends the MsgA to the base station on the selected PRACH time-frequency resource and PUSCH time-frequency resource.

In a possible implementation, when the determined TA accuracy level is greater than or equal to a first threshold, TA adjustment may be performed on both sending time of the random access preamble and sending time of the uplink data based on a TA used when random access is initiated. Otherwise, when the TA accuracy level is less than the first threshold, the TA accuracy level is the lowest. In this case, the TA of the UE is 0, to be specific, TA adjustment is not performed on the random access preambles and the uplink data.

Specifically, when S703 is performed, sending time of the first random access preamble is determined based on the TA used when random access is initiated and a time domain position of the first PRACH time-frequency resource, sending time of the first uplink data is determined based on the TA and a time domain position of the first PUSCH time-frequency resource, and the first random access preamble and the first uplink data are sent to the network device based on the determined sending time of the first random access preamble and the determined sending time of the first uplink data.

In another possible implementation, when the determined TA accuracy level is greater than or equal to a first threshold, TA adjustment may be performed on sending time of the uplink data based on only the TA used when random access is initiated. Otherwise, when the TA accuracy level is less than the first threshold, the TA accuracy level is the lowest. In this case, the TA of the UE is 0, to be specific, TA adjustment is not performed on the random access preambles and the uplink data.

Specifically, when S703 is performed, sending time of the first random access preamble is determined based on a time domain position of the first PRACH time-frequency resource, sending time of the first uplink data is determined based on the TA and a time domain position of the first PUSCH time-frequency resource, and the first random access preamble and the first uplink data are sent to the network device based on the determined sending time of the first random access preamble and the determined sending time of the first uplink data.

In an example, a TA used when random access is performed may be a TA indicated by the base station, for example, may be a TA value that is sent by the base station and that is received in a previous random access procedure.

In another example, the UE determines a TA value based on the downlink signal or position information. The UE has the TA tracking capability. The UE tracks, based on the downlink reference signal or synchronization signal, a TA value after adjusting the TA, or tracks, based on the distance between the UE and the base station, a TA value after adjusting the TA. When the TA is adjusted, tracking and adjustment may be performed based on the TA indicated by the base station, and tracking and adjustment may be performed again based on a previous TA that is tracked and adjusted. It should be understood that the TA may be adjusted and updated each time. For whether the TA is updated based on the TA indicated by the base station or updated based on a previous TA that is tracked and adjusted, the TA is updated again based on a latest updated TA.

S704: The base station detects the random access preamble and the uplink data based on the plurality of random access resource sets.

In a second possible implementation, in the different relationships of the three types of resources, manners of detecting the random access preamble and the uplink data by the base station are different.

In the first example, a first detection manner may be used.

In the first example, the PRACH time-frequency resources included in the different random access resource sets are different.

In the first detection manner, when the random access preamble is detected on a PRACH time-frequency resource in the first random access resource set, the uplink signal is detected on the plurality of PUSCH time-frequency resources in the first random access resource set, where the first random resource set is one of the plurality of random access resource sets.

For example, the UE detects the random access preamble on the PRACH time-frequency resources included in the PRACH time-frequency resource set 1, the PRACH time-frequency resource set 2, and the PRACH time-frequency resource set 3. For example, when the first random access preamble is detected on the first PRACH time-frequency resource in the random access resource set 1, the uplink data is detected on the plurality of PUSCH time-frequency resources in the random access resource set 1. In other words, when the first random access preamble is detected on the first PRACH time-frequency resource in the PRACH time-frequency resource set 1, the uplink data is detected on the PUSCH time-frequency resource set 1 corresponding to the PRACH time-frequency resource set 1.

In the second example, a second detection manner may be used.

In the second example, the random access preambles included in the different random access resource sets are different. In the second detection manner, when the random access preamble is detected and the random access preamble is one of the plurality of random access preambles included in the first random access resource set, the uplink signal is detected on the plurality of PUSCH time-frequency resources in the first random access resource set, where the first random resource set is one of the plurality of random access resource sets.

For example, the UE detects the random access preamble on the PRACH time-frequency resources included in the PRACH time-frequency resource set 1, the PRACH time-frequency resource set 2, and the PRACH time-frequency resource set 3. For example, a random access preamble 1 is detected, and the random access preamble 1 belongs to the group 1. In this case, the uplink data is detected on the PUSCH time-frequency resource included in the PUSCH time-frequency resource set 1 corresponding to the group 1.

In the third example, a third detection manner may be used.

PRACH time-frequency resources and random access preambles that are used for random access at the different TA accuracy levels are not distinguished, and may all be the same, but configured PUSCH time-frequency resources that are used to random access at the different TA accuracy levels are different.

In a third detection manner, when detecting the random access preamble and the uplink data, the base station detects the random access preamble on the PRACH time-frequency resource sets configured by the base station. When the random access preamble 1 is detected, based on PUSCH time-frequency resources corresponding to the PRACH time-frequency resource carrying the random access preamble 1, the random access preamble 1 is corresponding to two PUSCH time-frequency resource sets. Therefore, the uplink data is detected on PUSCH time-frequency resources included in the corresponding two PUSCH time-frequency resource sets.

In a possible example, when the random access preamble and the uplink data are detected on a resource included in the first random access resource set, sending a timing advance command, where when the TA accuracy level corresponding to the first random access resource set is greater than or equal to a first threshold, the timing advance command carries a TA adjustment value; and when the TA accuracy level corresponding to the first random access resource set is less than the first threshold, the timing advance command carries a TA value.

When the uplink data is detected on the first random access resource set, and the TA accuracy level corresponding to the first random access resource set is greater than or equal to a first threshold, it indicates that the TA value is not 0. Therefore it is determined that the UE performs TA adjustment when sending the uplink data, so that the TA adjustment value is sent in the timing advance command. When the TA accuracy level corresponding to the first random access resource set is less than the first threshold, it indicates that the TA value is 0. Therefore, it is determined that the UE does not perform TA adjustment when sending the uplink data, so that the base station sends the TA value in the timing advance command. Formats of the timing advance command carrying the TA adjustment value and the timing advance command carrying the TA value may be different. For example, quantities of occupied bits are different, or the timing advance command includes an indication field, and a value included in the indication field is used to indicate the TA adjustment value or the TA value. For example, 1 bit is used to indicate whether the value is the TA adjustment value or the TA value, where a value of the bit being 1 indicates that the value is the TA adjustment value, and the value of the bit being 0 indicates that the value is the TA value.

For example, a manner in which the UE determines, after receiving the timing advance command, to update the TA based on the TA adjustment value and TA value carried in the timing advance command may vary. For details, refer to Manner 1 and Manner 2 of the first possible implementation. Details are not described herein again.

Same as the foregoing concept, as shown in FIG. 9, an embodiment of this application provides a communication apparatus 800. The communication apparatus 800 may include a transceiver module 801 and a processing module 802.

In a possible implementation of this application, the apparatus 800 may be applied to a terminal device, and is configured to perform a step performed by the terminal device in FIG. 5 or FIG. 7.

In an example of this application, the apparatus 800 is configured to perform a step performed by the UE in the first possible implementation corresponding to FIG. 5.

Specifically, the transceiver module 801 is configured to receive configuration information sent by a network device, where the configuration information is used to configure a first random access resource set and a second random access resource set, the first random access resource set includes at least one physical random access channel PRACH time-frequency resource, at least one random access preamble, and at least one physical uplink shared channel PUSCH time-frequency resource, and the second random access resource set includes at least one PRACH time-frequency resource, at least one random access preamble, and at least one PUSCH time-frequency resource.

The processing module 802 is configured to determine whether a TA is valid when random access is initiated.

The transceiver module 801 is further configured to: when the timing advance TA is valid when random access is initiated, send a first random access preamble and first uplink data to the network device by using a resource in the first random access resource set, where the first random access preamble is a random access preamble in the first random access resource set, the first random access preamble is carried on a first PRACH time-frequency resource in the first random access resource set, and the first uplink data is carried on a first PUSCH time-frequency resource; or when the TA is invalid when random access is initiated, send a second random access preamble and second uplink data to the network device by using a resource in the second random access resource set, where the second random access preamble is a random access preamble in the first random access resource set, the second random access preamble is carried on a second PRACH time-frequency resource in the second random access resource set, and the second uplink data is carried on a second PUSCH time-frequency resource in the second random access resource set. For example, any PUSCH time-frequency resource in the first random access resource set is different from any PUSCH time-frequency resource in the second random access resource set.

For example, any PRACH time-frequency resource in the first random access resource set is different from any PRACH time-frequency resource in the second random access resource set; or any random access preamble in the first random access resource set is different from any random access preamble in the second random access resource set.

For example, when the TA is valid when random access is initiated, the processing module 802 is further configured to: determine sending time of the first random access preamble based on the TA and a time domain position of the first PRACH time-frequency resource; and determine sending time of the first uplink data based on the valid TA and a time domain position of the first PUSCH time-frequency resource.

The transceiver module 801 is specifically configured to send the first random access preamble and the first uplink data to the network device based on the determined sending time of the first random access preamble and the determined sending time of the first uplink data.

For example, when the TA is valid when random access is initiated, the processing module 802 determines the sending time of the first random access preamble based on the time domain position of the first PRACH time-frequency resource, and determines the sending time of the first uplink data based on the TA and the time domain position of the first PUSCH time-frequency resource.

The transceiver module 801 is specifically configured to send the first random access preamble and the first uplink data to the network device based on the determined sending time of the first random access preamble and the determined sending time of the first uplink data.

For example, the TA is:

a TA indicated by the network device;
a TA value determined based on a downlink reference signal or a synchronization signal; or
a TA value determined based on a distance between the terminal device and the network device.

For example, a value set of a configuration parameter associated with a PUSCH time-frequency resource included in the first random access resource set is different from a value set of a configuration parameter associated with a PUSCH time-frequency resource included in the second random access resource set.

The configuration parameter includes at least one of a modulation and coding scheme MCS, a cyclic prefix, an uplink control information parameter, and a power control parameter.

For example, the processing module 802 determines that the TA is valid when determining that the following conditions are satisfied:

a TA timer does not expire when random access is initiated;
the terminal device has a capability of adjusting the TA based on a received downlink reference signal and received position information; or
a time difference between time when random access is initiated and time when a previous TA is adjusted is less than a preset threshold.

For example, the transceiver module 801 is further configured to receive a timing advance command sent by the network device in response to the first random access preamble, where the timing advance command carries a TA adjustment value. The processing module 802 is further configured to adjust a value of the TA based on the TA and the TA adjustment value.

For example, the transceiver module 801 is further configured to receive a timing advance command sent by the network device in response to the second random access preamble, where the timing advance command carries a TA value. The processing module is further configured to use the TA value as a new TA value.

In an example of this application, the apparatus 800 is configured to perform a step performed by the UE in the second possible implementation corresponding to FIG. 7.

The transceiver module 801 is configured to receive configuration information sent by a network device.

The configuration information is used to configure a plurality of random access resource sets, each of the plurality of random access resource sets is corresponding to one timing advance TA accuracy level, random access resource sets corresponding to different TA accuracy levels are different, and each of the plurality of random access resource sets includes at least one physical random access channel PRACH time-frequency resource, at least one random access preamble, and at least one physical uplink shared channel PUSCH time-frequency resource.

The processing module 802 is configured to determine a TA accuracy level when random access is initiated.

The transceiver module 801 is further configured to send a first random access preamble and first uplink data to the network device by using a resource in a random access resource set corresponding to the determined TA accuracy level. The first random access preamble is a random access preamble in the random access resource set corresponding to the determined TA accuracy level, the first random access preamble is carried on a first PRACH time-frequency resource in the random access resource set corresponding to the determined TA accuracy level, and the first uplink data is carried on a first PUSCH time-frequency resource in the random access resource set corresponding to the determined TA accuracy level.

For example, PUSCH time-frequency resources included in different random access resource sets are different.

For example, PRACH time-frequency resources included in different random access resource sets are different. Alternatively, random access preambles included in different random access resource sets are different.

For example, when the determined TA accuracy level is greater than or equal to a first threshold, the processing module 802 is further configured to: determine sending time of the first random access preamble based on a TA used when random access is initiated and a time domain position of the first PRACH time-frequency resource; and determine sending time of the first uplink data based on the TA and a time domain position of the first PUSCH time-frequency resource.

The transceiver module 801 is specifically configured to send the first random access preamble and the first uplink data to the network device based on the determined sending time of the first random access preamble and the determined sending time of the first uplink data.

For example, when the determined TA accuracy level is greater than or equal to a first threshold, the processing module 802 is further configured to: determine sending time of the first random access preamble based on a time domain position of the first PRACH time-frequency resource; and determine sending time of the first uplink data based on the TA and a time domain position of the first PUSCH time-frequency resource.

The transceiver module 801 is specifically configured to send the first random access preamble and the first uplink data to the network device based on the determined sending time of the first random access preamble and the determined sending time of the first uplink data.

For example, the TA is:

a TA indicated by the network device;
a TA value determined based on a downlink reference signal or a synchronization signal; or
a TA value determined based on a distance between the terminal device and the network device.

For example, when the determined TA accuracy level is greater than or equal to the first threshold, the transceiver module 801 is further configured to receive a timing advance command sent by the network device in response to the first random access preamble, where the timing advance command carries a TA adjustment value. The processing module 802 is further configured to adjust a value of the TA based on the TA and the TA adjustment value.

For example, when the determined TA accuracy level is less than the first threshold, the transceiver module 801 is further configured to receive a timing advance command sent by the network device in response to the first random access preamble, where the timing advance command carries a TA value. The processing module 802 is further configured to use the TA value as a new TA value.

For example, value sets of configuration parameters associated with PUSCH time-frequency resources included in different random access resource sets are different; and the configuration parameter includes at least one of a modulation and coding scheme MCS, a cyclic prefix, an uplink control information parameter, and a power control parameter.

In another possible implementation of this application, the apparatus 800 may be applied to a terminal device, and is configured to perform a step performed by the network device in FIG. 5 or FIG. 7.

In an example of this application, the apparatus 800 is configured to perform a step performed by the base station in the first possible implementation corresponding to FIG. 5.

The transceiver module 801 is configured to send configuration information, where the configuration information is used to configure a first random access resource set that is required by random access performed when a timing advance TA is valid and a second random access resource set that is required by random access performed when the TA is invalid, the first random access resource set includes a plurality of physical random access channel PRACH time-frequency resources, a plurality of random access preambles, and a plurality of PUSCH time-frequency resources, and the second random access resource set includes a plurality of PRACH time-frequency resources, a plurality of random access preambles, and a plurality of PUSCH time-frequency resources.

The processing module 802 detects a random access preamble and uplink data based on the first random access resource set and the second random access resource set.

For example, any PUSCH time-frequency resource in the first random access resource set is different from any PUSCH time-frequency resource in the second random access resource set.

For example, any PRACH time-frequency resource in the first random access resource set is different from any PRACH time-frequency resource in the second random access resource set.

The processing module 802 is specifically configured to: when a first random access preamble is detected on a first PRACH time-frequency resource in the first random access resource set, detect the uplink signal on the plurality of PUSCH time-frequency resources in the first random access resource set; or when a second random access preamble is detected on a second PRACH time-frequency resource in the second random access resource set, detect the uplink signal on the plurality of PUSCH time-frequency resources in the second random access resource set.

For example, any random access preamble in the first random access resource set is different from any random access preamble in the second random access resource set.

The processing module 802 is specifically configured to: when the first random access preamble is detected, and the first random access preamble is one of the plurality of random access preambles included in the first random access resource set, detect the uplink signal on the plurality of PUSCH time-frequency resources in the first random access resource set; or when the second random access preamble is detected, and the second random access preamble is one of the plurality of random access preambles included in the second random access resource set, detect the uplink signal on the plurality of PUSCH time-frequency resources in the second random access resource set.

For example, the transceiver module 801 is further configured to: receive a first indication from a terminal device, where the first indication is used to indicate that the terminal device has a capability of tracking the TA, and the capability of tracking the TA indicates that the terminal device supports tracking and adjusting the TA based on a received downlink signal and/or received position information of the terminal device; and send a second indication to the terminal device based on the first indication, where the second indication is used to indicate TA timing duration configured by the network device for the terminal device.

The processing module 802 may be further configured to generate the second indication.

For example, the processing module 802 is further configured to generate a timing advance command in response to the random access preamble and the uplink data, and the transceiver module 801 is further configured to send the timing advance command.

When the random access preamble and the uplink data are detected based on the first random access resource set, the timing advance command carries a TA adjustment value; and when the random access preamble and the uplink data are detected based on the second random access resource set, the timing advance command carries a TA value.

In another example of this application, the apparatus 800 is configured to perform a step performed by the base station in the second possible implementation corresponding to FIG. 7.

The transceiver module 801 is configured to send configuration information, where the configuration information configures a plurality of random access resource sets, each of the plurality of random access resource sets is corresponding to one timing advance TA accuracy level, random access resource sets corresponding to different TA accuracy levels are different, and each of the plurality of random access resource sets includes a plurality of physical random access channel PRACH time-frequency resources, a plurality of random access preambles, and a plurality of physical uplink shared channel PUSCH time-frequency resources.

The processing module 802 is configured to detect a random access preamble and uplink data based on the plurality of random access resource sets.

For example, PUSCH time-frequency resources included in different random access resource sets are different.

For example, PRACH time-frequency resources included in different random access resource sets are different. The processing module 802 is specifically configured to: when detecting the random access preamble on a first PRACH time-frequency resource in a first random access resource set, detect the uplink signal on the plurality of PUSCH time-frequency resources in the first random access resource set, where the first random resource set is one of the plurality of random access resource sets.

For example, random access preambles included in different random access resource sets are different. The processing module 801 is specifically configured to: when the random access preamble is detected and the random access preamble is one of the plurality of random access preambles included in the first random access resource set, detect the uplink signal on the plurality of PUSCH time-frequency resources in the first random access resource set, where the first random resource set is one of the plurality of random access resource sets.

For example, the transceiver module 801 is further configured to send a timing advance command when the processing module 802 detects the random access preamble and the uplink data on a resource included in the first random access resource set.

When a TA accuracy level corresponding to the first random access resource set is greater than or equal to a first threshold, the timing advance command carries a TA adjustment value; and when the TA accuracy level corresponding to the first random access resource set is less than the first threshold, the timing advance command carries a TA value. In this embodiment of this application, for specific descriptions of steps performed by the transceiver module 801 and the processing module 802, refer to the descriptions in the embodiments corresponding to FIG. 5 and FIG. 7. Division into the modules in the embodiments of this application is an example, is merely division into logical functions, and may be other division during actual implementation. In addition, functional modules in the embodiments of this application may be integrated into one processor, or each of the modules may exist alone physically, or two or more modules may be integrated into one module. The integrated module may be implemented in a form of hardware, or may be implemented in a form of a software functional module.

Same as the foregoing concept, as shown in FIG. 10, this application further provides a communication apparatus 900. The apparatus 900 may be applied to the network device shown in the foregoing embodiments, or may be applied to the terminal device shown in the foregoing embodiments. This is not limited herein.

Based on the same concept, FIG. 10 shows the apparatus 900 provided in this application. The apparatus 900 includes at least one processor 910. The apparatus may further include at least one memory 920, configured to store program instructions and/or data. The memory 920 is coupled to the processor 910. The coupling in this embodiment of this application is an indirect coupling or a communication connection between apparatuses, units, or modules, may be in an electrical form, a mechanical form, or another form, and is used for information exchange between the apparatuses, the units, and the modules. The processor 910 may cooperate with the memory 920. The processor 910 may execute the program instructions stored in the memory 920, so that the processor 910 invokes the program instructions to implement a function of the processor 910. Optionally, at least one of the at least one memory 920 may be included in the processor 910. The apparatus 900 may further include a communication interface 930, and the apparatus 900 may exchange information with another device through the communication interface 930. The communication interface 930 may be a circuit, a bus, a transceiver, or any other apparatus that can be configured to exchange information.

In a possible implementation, the apparatus 900 is applied to a network device. Specifically, the apparatus 900 may be a network device, or may be an apparatus that can support the network device in implementing a function of the network device in the method in any one of the foregoing embodiments. For example, the at least one processor 910 in the apparatus 900 is configured to implement a function of the network device in the method in any one of the foregoing embodiments.

In a possible implementation, the apparatus 900 is applied to a terminal device. Specifically, the apparatus 900 may be a terminal device, or may be an apparatus that can support the terminal device in implementing a function of the terminal device in the method in any one of the foregoing embodiments. For example, the at least one processor 910 in the apparatus 900 is configured to implement a function of the terminal device in the method in any one of the foregoing embodiments.

For example, the apparatus 900 may be a chip or a chip system. Optionally, in this embodiment of this application, the chip system may include a chip, or may include a chip and another discrete component.

In this embodiment of this application, a specific connection medium among the communication interface 930, the processor 910, and the memory 920 is not limited. In this embodiment of this application, in FIG. 10, the memory 920, the processor 910, and the communication interface 930 are connected by using a bus. The bus is indicated by using a bold line in FIG. 10. A connection manner between other components is merely an example for description, and is not limited thereto. The bus may be classified into an address bus, a data bus, a control bus, and the like. For ease of representation, only one bold line is used to represent the bus in FIG. 10, but this does not mean that there is only one bus or only one type of bus.

In the embodiments of this application, the processor may be a general-purpose processor, a digital signal processor, an application-specific integrated circuit, a field programmable gate array or another programmable logic device, a discrete gate or transistor logic device, or a discrete hardware component, and may implement or perform the methods, steps, and logical block diagrams disclosed in the embodiments of this application. The general-purpose processor may be a microprocessor or any conventional processor or the like. The steps of the methods disclosed with reference to the embodiments of this application may be directly performed by a hardware processor, or may be performed by a combination of hardware and software modules in the processor.

In the embodiments of this application, the memory may be a non-volatile memory, for example, a hard disk drive (hard disk drive, HDD) or a solid-state drive (solid-state drive, SSD), or may be a volatile memory (volatile memory), for example, a random access memory (random-access memory, RAM). The memory may alternatively be any other medium that can be configured to carry or store expected program code in a form of an instruction or a data structure and that can be accessed by a computer, but is not limited thereto. The memory in the embodiments of this application may alternatively be a circuit or any other apparatus that can implement a storage function, and is configured to store the program instructions and/or the data.

Based on the foregoing concept, FIG. 11 is a schematic structural diagram of a network device such as a base station according to this application. The base station may be applied to the scenario of the communication system shown in FIG. 1, and the base station may be the network device shown in FIG. 5 or FIG. 7. The base station may be configured to perform a step performed by the network device in the procedure shown in FIG. 5 or FIG. 7. Specifically, the base station 1000 may include one or more radio frequency units, such as a remote radio unit (remote radio unit, RRU) 1001 and one or more baseband units (baseband unit, BBU) (which may also be referred to as digital units, DUs) 1002. The RRU 1001 may be a transceiver unit, a transceiver machine, a transceiver circuit, a transceiver, or the like, and may include at least one antenna 10011 and a radio frequency unit 10010. The RRU 1001 may be configured to: receive and send a radio frequency signal, and perform conversion between the radio frequency signal and a baseband signal, for example, configured to send downlink control information to a terminal device. The BBU 1002 may be configured to perform baseband processing, control the base station, and so on. The RRU 1001 and the BBU 1002 may be physically disposed together, or may be physically separated, namely, a distributed base station.

The BBU 1002 is a control center of the base station, or may be referred to as a processing unit, and may be configured to complete a baseband processing function such as channel coding, multiplexing, modulation, or spectrum spreading. For example, the BBU (the processing unit) may be configured to control the base station to perform the method in the procedure shown in FIG. 5 or FIG. 7.

In an example, the BBU 1002 may include one or more boards, and a plurality of boards may jointly support a radio access network (such as an NR network) in a single access standard, or may separately support radio access networks in different access standards. The BBU 1002 may further include a memory 10021 and a processor 10022. The memory 10021 is configured to store necessary instructions and necessary data. For example, the memory 10021 stores "configuration information" in the foregoing embodiments, and the processor 10022 is configured to control the base station to perform a necessary action. The memory 10021 and the processor 10022 are configured to serve one or more boards. To be specific, a memory and a processor may be disposed on each board, or a plurality of boards may share a same memory and processor. In addition, each board may be further provided with a necessary circuit. Same as the foregoing concept, FIG. 12 is a schematic structural diagram of a terminal device. The terminal device is applicable to a step performed by the terminal device in the procedure shown in FIG. 5 or FIG. 7. For ease of description, FIG. 12 shows only main components of the terminal device. As shown in FIG. 12, the terminal device 1100 includes a processor, a memory, and a control circuit. Optionally, the terminal device 1100 may further include an antenna and an input/output apparatus. The processor may be configured to: process a communication protocol and communication data, control user equipment, execute a software program, and process data of the software program. The memory may store the software program and/or the data. The control circuit may be configured to: perform conversion between a baseband signal and a radio frequency signal, and process the radio frequency signal. The control circuit, together with an antenna, may also be referred to as a transceiver that may be configured to send and receive a radio frequency signal in an electromagnetic wave form. The input/output apparatus such as a touchscreen, a display, or a keyboard may be configured to: receive data entered by a user, and output data to the user.

In this embodiment of this application, the processor can read a software program in a storage unit, interpret and execute instructions of the software program, and process data of the software program. When data needs to be sent wirelessly, the processor performs baseband processing on the to-be-sent data, and then outputs a baseband signal to the radio frequency circuit. The radio frequency circuit performs radio frequency processing on the baseband signal, and then sends, by using the antenna, a radio frequency signal in an electromagnetic wave form. When data is sent to the user equipment, the radio frequency circuit receives a radio frequency signal through the antenna, converts the radio frequency signal into a baseband signal, and outputs the baseband signal to the processor, and the processor converts the baseband signal into data and processes the data.

A person skilled in the art may understand that, for ease of description, FIG. 12 shows only one memory and one processor. In actual user equipment, there may be a plurality of processors and a plurality of memories. The memory may also be referred to as a storage medium, a storage device, or the like. This is not limited in the embodiments of this application.

In an optional implementation, the processor may include a baseband processor and a central processing unit. The baseband processor may be configured to process the communication protocol and the communication data. The central processing unit may be configured to: control the entire user equipment, execute the software program, and process the data of the software program. The processor in FIG. 12 integrates functions of the baseband processor and the central processing unit. A person skilled in the art may understand that the baseband processor and the central processing unit may be individually independent processors, and are interconnected by using a technology such as a bus. A person skilled in the art may understand that the terminal device may include a plurality of baseband processors to adapt to different network standards, the terminal device may include a plurality of central processing units to improve a processing capability of the terminal device, and parts of the terminal device may be connected by using various buses. The baseband processor may also be expressed as a baseband processing circuit or a baseband processing chip. The central processing unit may also be expressed as a central processing circuit or a central processing chip. A function of processing the communication protocol and communication data may be embedded into the processor, or may be stored in the storage unit in a form of a software program, so that the processor executes the software program to implement a baseband processing function.

For example, in this embodiment of this application, the antenna that has a transceiver function and the control circuit may be used as a transceiver module 1101 of the terminal device 1100, and the processor having a processing function may be considered as a processing unit 1102 of the terminal device 1100. As shown in FIG. 12, the terminal device 1100 may include the transceiver unit 1101 and the processing unit 1102. The transceiver unit 1101 may also be referred to as a transceiver, a transceiver machine, a transceiver apparatus, or the like. Optionally, a component that is in the transceiver unit 1101 and that is configured to implement a receiving function may be considered as a receiving unit, and a component that is in the transceiver unit 1101 and that is configured to implement a sending function may be considered as a sending unit. In other words, the transceiver unit 1101 includes the receiving unit and the sending unit. For example, the receiving unit may also be referred to as a receiver machine, a receiver, a receive circuit, or the like, and the sending unit may also be referred to as a transmitter machine, a transmitter, a transmit circuit, or the like. It should be understood that the network device and the terminal device in the foregoing apparatus embodiments are completely corresponding to the network device or the terminal device in the method embodiments. A corresponding module or unit performs a corresponding step. For example, a sending module (transmitter) performs a sending step in the method embodiments, a receiving module (receiver) performs a receiving step in the method embodiments, and steps other than the sending step and the receiving step may be performed by a processing module (processor). For a function of a specific module, refer to a corresponding method embodiment. The sending module and the receiving module may form a transceiver module, and the transmitter and the receiver may form a transceiver, to jointly implement receiving and sending functions. There may be one or more processors.

According to the methods provided in the embodiments of the present invention, an embodiment of this application further provides a communication system, including the foregoing network device and terminal device.

Based on the foregoing embodiments, an embodiment of this application further provides a computer storage medium. The storage medium stores a software program, and when the software program is read and executed by one or more processors, the method provided in any one or more of the foregoing embodiments may be implemented. The computer storage medium may include: any medium that can store program code, such as a USB flash drive, a removable hard disk, a read-only memory, a random access memory, a magnetic disk, or an optical disc.

Based on the foregoing embodiments, an embodiment of this application further provides a chip. The chip includes a processor, configured to implement a function in any one or more of the foregoing embodiments, for example, obtain or process information or a message in the foregoing methods. Optionally, the chip further includes a memory. The memory is configured to store necessary program instructions and data that are executed by the processor. The chip may include a chip, or may include a chip and another discrete device.

It should be understood that in the embodiments of the present invention, the processor may be a central processing unit (Central Processing Unit, "CPU" for short), or the processor may be another general-purpose processor, a digital signal processor (DSP), an application-specific integrated circuit (ASIC), a field programmable gate array (FPGA) or another programmable logic device, a discrete gate or transistor logic device, a discrete hardware component, or the like. The general-purpose processor may be a microprocessor, or the processor may be any conventional processor or the like.

The memory may include a read-only memory and a random access memory, and provide instructions and data to the processor. A part of the memory may further include a non-volatile random access memory.

The bus system may further include a power bus, a control bus, a status signal bus, and the like, in addition to a data bus. However, for clear description, various types of buses in the figures are marked as a bus system. In an implementation process, steps in the foregoing methods can be completed by using a hardware integrated logical circuit in the processor, or by using instructions in a form of software. The steps of the methods disclosed with reference to the embodiments of the present invention may be directly performed by a hardware processor, or may be performed by a combination of hardware and software modules in the processor. The software module may be located in a mature storage medium in the art, such as a random access memory, a flash memory, a read-only memory, a programmable read-only memory, an electrically erasable programmable memory, or a register. The storage medium is located in the memory, and the processor reads information in the memory and completes the steps in the foregoing methods in combination with hardware of the processor. To avoid repetition, details are not described herein again.

## Claims

**1.** A random access method, comprising:

receiving, by a terminal device, configuration information sent by a network device, wherein the configuration information is used to configure a first random access resource set and a second random access resource set, the first random access resource set comprises at least one physical random access channel, PRACH, time-frequency resource, at least one random access preamble, and at least one physical uplink shared channel, PUSCH, time-frequency resource, and the second random access resource set comprises at least one PRACH time-frequency resource, at least one random access preamble, and at least one PUSCH time-frequency resource; and

when a timing advance, TA, is valid when random access is initiated, sending, by the terminal device, a first random access preamble and first uplink data to the network device by using a resource in the first random access resource set, wherein the first random access preamble is a random access preamble in the first random access resource set, the first random access preamble is carried on a first PRACH time-frequency resource in the first random access resource set, and the first uplink data is carried on a first PUSCH time-frequency resource; or

when a TA is invalid when random access is initiated, sending, by the terminal device, a second random access preamble and second uplink data to the network device by using a resource in the second random access resource set, wherein the second random access preamble is a random access preamble in the second random access resource set, the second random access preamble is carried on a second PRACH time-frequency resource in the second random access resource set, and the second uplink data is carried on a second PUSCH time-frequency resource in the second random access resource set;

- wherein any PUSCH time-frequency resource in the first random access resource set is different from any PUSCH time-frequency resource in the second random access resource set; and/or
- wherein any PRACH time-frequency resource in the first random access resource set is different from any PRACH time-frequency resource in the second random access resource set; or any random access preamble in the first random access resource set is different from any random access preamble in the second random access resource set.

2. The method according to claim 1, wherein when the TA is valid when random access is initiated, the sending, by the terminal device, a first random access preamble and first uplink data by using a resource in the first random access resource set comprises:

determining sending time of the first random access preamble based on the TA and a time domain position of the first PRACH time-frequency resource, determining sending time of the first uplink data based on the valid TA and a time domain position of the first PUSCH time-frequency resource, and sending the first random access preamble and the first uplink data to the network device based on the determined sending time of the first random access preamble and the determined sending time of the first uplink data; or

determining sending time of the first random access preamble based on a time domain position of the first PRACH time-frequency resource, determining sending time of the first uplink data based on the TA and a time domain position of the first PUSCH time-frequency resource, and sending the first random access preamble and the first uplink data to the network device based on the determined sending time of the first random access preamble and the determined sending time of the first uplink data

3. The method according to any one of claims 1 to 2, wherein the TA is:

a TA indicated by the network device;
a TA value determined based on a downlink reference signal or a synchronization signal; or
a TA value determined based on a distance between the terminal device and the network device

4. The method according to any one of claims 1 to 3, wherein a value set of a configuration parameter associated with a PUSCH time-frequency resource comprised in the first random access resource set is different from a value set of a configuration parameter associated with a PUSCH time-frequency resource comprised in the second random access resource set; and
the configuration parameter comprises at least one of a modulation and coding scheme MCS, a cyclic prefix, an uplink control information parameter, and a power control parameter

5. The method according to any one of claims 1 to 4, wherein the TA is valid when the following condition is satisfied:

a TA timer does not expire when random access is initiated;

the terminal device has a capability of adjusting the TA based on a received downlink reference signal and received position information; or
a time difference between time when random access is initiated and time when a previous TA is adjusted is less than a preset threshold.

6. The method according to any one of claims 1 to 5, wherein the method further comprises:

receiving, by the terminal device, a timing advance command sent by the network device in response to the first random access preamble, wherein the timing advance command carries a TA adjustment value; and
adjusting, by the terminal device, a value of the TA based on the TA and the TA adjustment value

7. The method according to any one of claims 1 to 6, wherein the method further comprises:

receiving, by the terminal device, a timing advance command sent by the network device in response to the second random access preamble, wherein the timing advance command carries a TA value; and
using, by the terminal device, the TA value as a new TA value

8. A random access method, comprising:

sending, by a network device, configuration information, wherein the configuration information is used to configure a first random access resource set that is required by random access performed when a timing advance, TA, is valid and a second random access resource set that is required by random access performed when the TA is invalid, the first random access resource set comprises a plurality of physical random access channel, PRACH, time-frequency resources, a plurality of random access preambles, and a plurality of PUSCH time-frequency resources, and the second random access resource set comprises a plurality of PRACH time-frequency resources, a plurality of random access preambles, and a plurality of PUSCH time-frequency resources; and
detecting, by the network device, a random access preamble and uplink data based on the first random access resource set and the second random access resource set;

- wherein any PUSCH time-frequency resource in the first random access resource set is different from any PUSCH time-frequency resource in the second random access resource set; and/or
- wherein any PRACH time-frequency resource in the first random access resource set is different from any PRACH time-frequency resource in the second random access resource set; and the detecting, by the network device, a random access preamble and uplink data based on the first random access resource set and the second random access resource set comprises:

when a first random access preamble is detected on a first PRACH time-frequency resource in the first random access resource set, detecting the uplink signal on the plurality of PUSCH time-frequency resources in the first random access resource set; or
when a second random access preamble is detected on a second PRACH time-frequency resource in the second random access resource set, detecting the uplink signal on the plurality of PUSCH time-frequency resources in the second random access resource set.

9. A communication apparatus, comprising a processor and a memory, wherein

the memory is configured to store computer-executable instructions; and
the processor is configured to execute the computer-executable instructions stored in the memory, to enable the communication apparatus to implement a function of the following device in the method according to any one of claims 1 to 8: the network device or the terminal device

10. A computer-readable storage medium, wherein the storage medium stores computer instructions, and when the computer instructions are executed by a communication apparatus, the communication apparatus is enabled to perform the method according to any one of claims 1 to 8.

11. A computer program product, wherein the computer program product comprises computer instructions, and when the computer instructions are executed by a communication apparatus, the communication apparatus is enabled to perform the method according to any one of claims 1 to 8.

## Patentansprüche

1. Direktzugriffsverfahren, umfassend:

Empfangen, durch ein Endgerät, von Konfigurationsinformationen, die von einer Netzwerkvorrichtung gesendet werden, wobei die Konfigurationsinformationen verwendet werden, um einen ersten Direktzugriffsressourcensatz und einen zweiten Direktzugriffsressourcensatz zu konfigurieren, wobei der erste Direktzugriffsressourcensatz mindestens eine Zeit-Frequenz-Ressource eines physischen Direktzugriffskanals, PRACH, mindestens eine Direktzugriffspräambel und mindestens eine Zeit-Frequenz-Ressource eines gemeinsam genutzten physischen Uplink-Kanals, PUSCH, umfasst und der zweite Direktzugriffsressourcensatz mindestens eine PRACH-Zeit-Frequenz-Ressource, mindestens eine Direktzugriffspräambel und mindestens eine PUSCH-Zeit-Frequenz-Ressource umfasst; und
wenn ein Zeitvorlauf TA gültig ist, wenn ein Direktzugriff initiiert wird, Senden, durch das Endgerät, einer ersten Direktzugriffspräambel und erster Uplink-Daten an die Netzwerkvorrichtung unter Verwendung einer Ressource in dem ersten Direktzugriffsressourcensatz, wobei die erste Direktzugriffspräambel eine Direktzugriffspräambel in dem ersten Direktzugriffsressourcensatz ist, die erste Direktzugriffspräambel auf einer ersten PRACH-Zeit-Frequenz-Ressource in dem ersten Direktzugriffsressourcensatz transportiert wird und die ersten Uplink-Daten auf einer ersten PUSCH-Zeit-Frequenz-Ressource transportiert werden; oder
wenn ein TA ungültig ist, wenn ein Direktzugriff initiiert wird, Senden, durch das Endgerät, einer zweiten Direktzugriffspräambel und zweiter Uplink-Daten an die Netzwerkvorrichtung unter Verwendung einer Ressource in dem zweiten Direktzugriffsressourcensatz, wobei die zweite Direktzugriffspräambel eine Direktzugriffspräambel in dem zweiten Direktzugriffsressourcensatz ist, die zweite Direktzugriffspräambel auf einer zweiten PRACH-Zeit-Frequenz-Ressource in dem zweiten Direktzugriffsressourcensatz transportiert wird und die zweiten Uplink-Daten auf einer zweiten PUSCH-Zeit-Frequenz-Ressource in dem zweiten Direktzugriffsressourcensatz transportiert werden;

- wobei sich jede PUSCH-Zeit-Frequenz-Ressource in dem ersten Direktzugriffsressourcensatz von jeder PUSCH-Zeit-Frequenz-Ressource in dem zweiten Direktzugriffsressourcensatz unterscheidet; und/oder
- wobei sich jede PRACH-Zeit-Frequenz-Ressource in dem ersten Direktzugriffsressourcensatz von jeder PRACH-Zeit-Frequenz-Ressource in dem zweiten Direktzugriffsressourcensatz unterscheidet; oder
sich jede Direktzugriffspräambel in dem ersten Direktzugriffsressourcensatz von jeder Direktzugriffspräambel in dem zweiten Direktzugriffsressourcensatz unterscheidet.

**2.** Verfahren nach Anspruch 1, wobei, wenn der TA gültig ist, wenn der Direktzugriff initiiert wird, das Senden, durch das Endgerät, einer ersten Direktzugriffspräambel und erster Uplink-Daten unter Verwendung einer Ressource in dem ersten Direktzugriffsressourcensatz Folgendes umfasst:

Bestimmen einer Sendezeit der ersten Direktzugriffspräambel basierend auf dem TA und einer Zeitdomänenposition der ersten PRACH-Zeit-Frequenz-Ressource, Bestimmen einer Sendezeit der ersten Uplink-Daten basierend auf dem gültigen TA und einer Zeitdomänenposition der ersten PUSCH-Zeit-Frequenz-Ressource und Senden der ersten Direktzugriffspräambel und der ersten Uplink-Daten an die Netzwerkvorrichtung basierend auf der bestimmten Sendezeit der ersten Direktzugriffspräambel und der bestimmten Sendezeit der ersten Uplink-Daten; oder
Bestimmen einer Sendezeit der ersten Direktzugriffspräambel basierend auf einer Zeitdomänenposition der ersten PRACH-Zeit-Frequenz-Ressource, Bestimmen einer Sendezeit der ersten Uplink-Daten basierend auf dem TA und einer Zeitdomänenposition der ersten PUSCH-Zeit-Frequenz-Ressource und Senden der ersten Direktzugriffspräambel und der ersten Uplink-Daten an die Netzwerkvorrichtung basierend auf der bestimmten Sendezeit der ersten Direktzugriffspräambel und der bestimmten Sendezeit der ersten Uplink-Daten.

**3.** Verfahren nach einem der Ansprüche 1 bis 2, wobei der TA Folgendes ist:

ein von der Netzwerkvorrichtung angegebener TA;
ein TA-Wert, der basierend auf einem Downlink-Referenzsignal oder einem Synchronisationssignal bestimmt wird; oder
ein TA-Wert, der basierend auf einer Entfernung zwischen dem Endgerät und der Netzwerkvorrichtung bestimmt wird.

**4.** Verfahren nach einem der Ansprüche 1 bis 3, wobei sich eine Wertmenge eines Konfigurationsparameters, der mit einer PUSCH-Zeit-Frequenz-Ressource assoziiert ist, die in dem ersten Direktzugriffsressourcensatz umfasst ist, von einer Wertmenge eines Konfigurationsparameters, der mit einer PUSCH-Zeit-Frequenz-Ressource assoziiert ist, die in dem zweiten Direktzugriffsressourcensatz umfasst ist, unterscheidet; und

der Konfigurationsparameter mindestens eines von einem Modulations- und Kodierungsschema MCS, einem zyklischen Präfix, einem Uplink-Steuerinformationsparameter und einem Leistungssteuerungsparameter umfasst.

**5.** Verfahren nach einem der Ansprüche 1 bis 4, wobei der TA gültig ist, wenn die folgende Bedingung erfüllt ist:

ein TA-Zeitgeber läuft nicht ab, wenn ein Direktzugriff initiiert wird;
das Endgerät weist eine Fähigkeit auf, den TA basierend auf einem empfangenen Downlink-Referenzsignal und empfangener Positionsinformationen einzustellen; oder
eine Zeitdifferenz zwischen der Zeit, zu der ein Direktzugriff initiiert wird, und der Zeit, zu der ein vorheriger TA eingestellt wird, ist kleiner als ein voreingestellter Schwellenwert.

**6.** Verfahren nach einem der Ansprüche 1 bis 5, wobei das Verfahren ferner Folgendes umfasst:

Empfangen, durch das Endgerät, eines Zeitvorlaufbefehls, der von der Netzwerkvorrichtung als Reaktion auf die erste Direktzugriffspräambel gesendet wird, wobei der Zeitvorlaufbefehl einen TA-Einstellwert transportiert; und
Einstellen, durch das Endgerät, eines Wertes des TA basierend auf dem TA und dem TA-Einstellwert.

**7.** Verfahren nach einem der Ansprüche 1 bis 6, wobei das Verfahren ferner Folgendes umfasst:

Empfangen, durch das Endgerät, eines Zeitvorlaufbefehls, der von der Netzwerkvorrichtung als Reaktion auf die zweite Direktzugriffspräambel gesendet wird, wobei der Zeitvorlaufbefehl einen TA-Wert transportiert; und
Verwenden des TA-Wertes als einen neuen TA-Wert durch das Endgerät.

**8.** Direktzugriffsverfahren, umfassend:

Senden, durch eine Netzwerkvorrichtung, von Konfigurationsinformationen, wobei die Konfigurationsinformationen verwendet werden, um einen ersten Direktzugriffsressourcensatz, der durch einen Direktzugriff benötigt wird, der durchgeführt wird, wenn ein Zeitvorlauf, TA, gültig ist, und einen zweiten Direktzugriffsressourcensatz, der durch einen Direktzugriff benötigt wird, der durchgeführt wird, wenn der TA ungültig ist, zu konfigurieren, wobei der erste Direktzugriffsressourcensatz eine Vielzahl von Zeit-Frequenz-Ressourcen eines physischen Direktzugriffskanals, PRACH, eine Vielzahl von Direktzugriffspräambeln und eine Vielzahl von Zeit-Frequenz-Ressourcen eines gemeinsam genutzten physischen Uplink-Kanals, PUSCH, umfasst und der zweite Direktzugriffsressourcensatz eine Vielzahl von PRACH-Zeit-Frequenz-Ressourcen, eine Vielzahl von Direktzugriffspräambeln und eine Vielzahl von PUSCH-Zeit-Frequenz-Ressourcen umfasst; und
Detektieren, durch die Netzwerkvorrichtung, einer Direktzugriffspräambel und von Uplink-Daten basierend auf dem ersten Direktzugriffsressourcensatz und dem zweiten Direktzugriffsressourcensatz;

- wobei sich jede PUSCH-Zeit-Frequenz-Ressource in dem ersten Direktzugriffsressourcensatz von jeder PUSCH-Zeit-Frequenz-Ressource in dem zweiten Direktzugriffsressourcensatz unterscheidet; und/oder
- wobei sich jede PRACH-Zeit-Frequenz-Ressource in dem ersten Direktzugriffsressourcensatz von jeder PRACH-Zeit-Frequenz-Ressource in dem zweiten Direktzugriffsressourcensatz unterscheidet; und das Detektieren, durch die Netzwerkvorrichtung, einer Direktzugriffspräambel und von Uplink-Daten basierend auf dem ersten Direktzugriffsressourcensatz und dem zweiten Direktzugriffsressourcensatz Folgendes umfasst:

wenn eine erste Direktzugriffspräambel auf einer ersten PRACH-Zeit-Frequenz-Ressource in dem ersten Direktzugriffsressourcensatz detektiert wird, Detektieren des Uplink-Signals auf der Vielzahl von PUSCH-Zeit-Frequenz-Ressourcen in dem ersten Direktzugriffsressourcensatz; oder
wenn eine zweite Direktzugriffspräambel auf einer zweiten PRACH-Zeit-Frequenz-Ressource in dem zweiten Direktzugriffsressourcensatz detektiert wird, Detektieren des Uplink-Signals auf der Vielzahl von PUSCH-Zeit-Frequenz-Ressourcen in dem zweiten Direktzugriffsressourcensatz.

**9.** Kommunikationsgerät, umfassend einen Speicher und einen Prozessor, wobei

der Speicher dazu konfiguriert ist, computerausführbare Anweisungen zu speichern; und
der Prozessor dazu konfiguriert ist, die in dem Speicher gespeicherten computerausführbaren Anweisungen auszuführen, um das Kommunikationsgerät in die Lage zu versetzen, eine Funktion der folgenden Vorrichtung in dem Verfahren nach einem der Ansprüche 1 bis 8 zu implementieren: die Netzwerkvorrichtung oder das Endgerät.

**10.** Computerlesbares Speichermedium, wobei das computerlesbare Speichermedium Computeranweisungen speichert, und wenn die Computeranweisungen durch ein Kommunikationsgerät ausgeführt werden, das Kommunikationsgerät in die Lage versetzt wird, das Verfahren nach einem der Ansprüche 1 bis 8 durchzuführen.

**11.** Computerprogrammprodukt, wobei das Computerprogrammprodukt Computeranweisungen umfasst, und wenn die Computeranweisungen durch ein Kommunikationsgerät ausgeführt werden, das Kommunikationsgerät in die Lage versetzt wird, das Verfahren nach einem der Ansprüche 1 bis 8 durchzuführen.

## Revendications

**1.** Procédé d'accès aléatoire, comprenant :

la réception, par un dispositif terminal, d'informations de configuration envoyées par un dispositif réseau, dans lequel les informations de configuration sont utilisées pour configurer un premier ensemble de ressources d'accès aléatoire et un second ensemble de ressources d'accès aléatoire, le premier ensemble de ressources d'accès aléatoire comprend au moins une ressource temps-fréquence de canal d'accès aléatoire physique, PRACH, au moins un préambule d'accès aléatoire et au moins une ressource temps-fréquence de canal partagé de liaison montante physique, PUSCH, et le second ensemble de ressources d'accès aléatoire comprend au moins une ressource temps-fréquence PRACH, au moins un préambule d'accès aléatoire et au moins une ressource temps-fréquence PUSCH ; et
lorsqu'une avance temporelle, TA, est valide lorsque l'accès aléatoire est initié, l'envoi, par le dispositif terminal, d'un premier préambule d'accès aléatoire et de premières données de liaison montante au dispositif réseau en utilisant une ressource dans le premier ensemble de ressources d'accès aléatoire, dans lequel le premier préambule d'accès aléatoire est un préambule d'accès aléatoire dans le premier ensemble de ressources d'accès aléatoire, le premier préambule d'accès aléatoire est transporté sur une première ressource temps-fréquence PRACH dans le premier ensemble de ressources d'accès aléatoire, et les premières données de liaison montante sont transportées sur une première ressource temps-fréquence PUSCH ; ou
lorsqu'une TA n'est pas valide lorsque l'accès aléatoire est initié, l'envoi, par le dispositif terminal, d'un second préambule d'accès aléatoire et de secondes données de liaison montante au dispositif réseau en utilisant une ressource dans le second ensemble de ressources d'accès aléatoire, dans lequel le second préambule d'accès aléatoire est un préambule d'accès aléatoire dans le second ensemble de ressources d'accès aléatoire, le second préambule d'accès aléatoire est transporté sur une seconde ressource temps-fréquence PRACH dans le second ensemble de ressources d'accès aléatoire, et les secondes données de liaison montante sont transportées sur une seconde ressource temps-fréquence PUSCH dans le second ensemble de ressources d'accès aléatoire ;

- dans lequel toute ressource temps-fréquence PUSCH dans le premier ensemble de ressources d'accès aléatoire est différente de toute ressource temps-fréquence PUSCH dans le second ensemble de ressources d'accès aléatoire ; et/ou
- dans lequel toute ressource temps-fréquence PRACH dans le premier ensemble de ressources d'accès aléatoire est différente de toute ressource de temps-fréquence PRACH dans le second ensemble de ressources d'accès aléatoire ; ou tout préambule d'accès aléatoire dans le premier ensemble de ressources d'accès aléatoire est différent de tout préambule d'accès aléatoire dans le second ensemble de ressources d'accès aléatoire.

**2.** Procédé selon la revendication 1, dans lequel, lorsque la TA est valide lorsque l'accès aléatoire est initié, l'envoi, par le dispositif terminal, d'un premier préambule d'accès aléatoire et de premières données de liaison montante à l'aide d'une ressource dans le premier ensemble de ressources d'accès aléatoire comprend :

la détermination de l'heure d'envoi du premier préambule d'accès aléatoire sur la base de la TA et d'une position de domaine temporel de la première ressource temps-fréquence PRACH, la détermination de l'heure d'envoi des premières données de liaison montante sur la base de la TA valide et d'une position de domaine temporel de la première ressource temps-fréquence PUSCH, et l'envoi du premier préambule d'accès aléatoire et des premières données de liaison montante au dispositif réseau sur la base de l'heure d'envoi déterminée du premier préambule d'accès aléatoire et de l'heure d'envoi déterminée des premières données de liaison montante ; ou

la détermination de l'heure d'envoi du premier préambule d'accès aléatoire sur la base d'une position de domaine temporel de la première ressource temps-fréquence PRACH, la détermination de l'heure d'envoi des premières données de liaison montante sur la base de la TA et d'une position de domaine temporel de la première ressource temps-fréquence PUSCH, et l'envoi du premier préambule d'accès aléatoire et des premières données de liaison montante au dispositif réseau sur la base de l'heure d'envoi déterminée du premier préambule d'accès aléatoire et de l'heure d'envoi déterminée des premières données de liaison montante.

**3.** Procédé selon l'une quelconque des revendications 1 et 2, dans lequel la TA est :

une TA indiquée par le dispositif réseau ;
une valeur TA déterminée sur la base d'un signal de référence de liaison descendante ou d'un signal de synchronisation ; ou
une valeur TA déterminée sur la base d'une distance entre le dispositif terminal et le dispositif réseau.

**4.** Procédé selon l'une quelconque des revendications 1 à 3, dans lequel un ensemble de valeurs d'un paramètre de configuration associé à une ressource temps-fréquence PUSCH comprise dans le premier ensemble de ressources d'accès aléatoire est différent d'un ensemble de valeurs d'un paramètre de configuration associé à une ressource temps-fréquence PUSCH comprise dans le second ensemble de ressources d'accès aléatoire ; et
le paramètre de configuration comprend au moins l'un d'un schéma de modulation et de codage MCS, d'un préfixe cyclique, d'un paramètre d'informations de commande de liaison montante et d'un paramètre de commande de puissance.

**5.** Procédé selon l'une quelconque des revendications 1 à 4, dans lequel la TA est valide lorsque la condition suivante est satisfaite :

un temporisateur TA n'expire pas lorsque l'accès aléatoire est initié ;
le dispositif terminal a la capacité d'ajuster la TA sur la base d'un signal de référence de liaison descendante reçu et d'informations de position reçues ; ou
une différence de temps entre le moment où l'accès aléatoire est initié et le moment où une TA précédente est ajustée est inférieure à un seuil prédéfini.

**6.** Procédé selon l'une quelconque des revendications 1 à 5, dans lequel le procédé comprend également :

la réception, par le dispositif terminal, d'une commande d'avance temporelle envoyée par le dispositif réseau en réponse au premier préambule d'accès aléatoire, dans lequel la commande d'avance temporelle comporte une valeur de réglage TA ; et
le réglage, par le dispositif terminal, d'une valeur de la TA sur la base de la TA et de la valeur de réglage TA.

**7.** Procédé selon l'une quelconque des revendications 1 à 6, dans lequel le procédé comprend également :

la réception, par le dispositif terminal, d'une commande d'avance temporelle envoyée par le dispositif réseau en réponse au second préambule d'accès aléatoire, dans lequel la commande d'avance temporelle comporte une valeur TA ; et
l'utilisation, par le dispositif terminal, de la valeur TA comme nouvelle valeur TA.

**8.** Procédé d'accès aléatoire, comprenant :

l'envoi, par un dispositif réseau, d'informations de configuration, dans lequel les informations de configuration sont utilisées pour configurer un premier ensemble de ressources d'accès aléatoire qui est requis par l'accès aléatoire effectué lorsqu'une avance temporelle, TA, est valide et un second ensemble de ressources d'accès aléatoire qui est requis par l'accès aléatoire effectué lorsque la TA est invalide, le premier ensemble de ressources d'accès aléatoire comprend une pluralité de ressources temps-fréquence de canal d'accès aléatoire physique, PRACH, une pluralité de préambules d'accès aléatoire et une pluralité de ressources temps-fréquence PUSCH, et le second ensemble de ressources d'accès aléatoire comprend une pluralité de ressources temps-fréquence PRACH, une pluralité de préambules d'accès aléatoire et une pluralité de ressources temps-fréquence PUSCH ; et
la détection, par le dispositif réseau, d'un préambule d'accès aléatoire et de données de liaison montante sur la base du premier ensemble de ressources d'accès aléatoire et du second ensemble de ressources d'accès aléatoire ;

- dans lequel toute ressource temps-fréquence PUSCH dans le premier ensemble de ressources d'accès aléatoire est différente de toute ressource temps-fréquence PUSCH dans le second ensemble de ressources d'accès aléatoire ; et/ou
- dans lequel toute ressource temps-fréquence PRACH dans le premier ensemble de ressources d'accès aléatoire est différente de toute ressource temps-fréquence PRACH dans le second ensemble de ressources d'accès aléatoire ; et la détection, par le dispositif réseau, d'un préambule d'accès aléatoire et de données de liaison montante sur la base du premier ensemble de ressources d'accès aléatoire et du second ensemble de ressources d'accès aléatoire comprend :

lorsqu'un premier préambule d'accès aléatoire est détecté sur une première ressource temps-fréquence PRACH dans le premier ensemble de ressources d'accès aléatoire, la détection du signal de liaison montante sur la pluralité de ressources temps-fréquence PUSCH dans le premier ensemble de ressources d'accès aléatoire ; ou
lorsqu'un second préambule d'accès aléatoire est détecté sur une seconde ressource temps-fréquence PRACH dans le second ensemble de ressources d'accès aléatoire, la détection du signal de liaison montante sur la pluralité de ressources temps-fréquence PUSCH dans le second ensemble de ressources d'accès aléatoire.

**9.** Appareil de communication, comprenant un processeur et une mémoire, dans lequel

la mémoire est configurée pour stocker des instructions exécutables par ordinateur ; et
le processeur est configuré pour exécuter les instructions exécutables par ordinateur stockées dans la mémoire, pour permettre à l'appareil de communication de mettre en oeuvre une fonction du dispositif suivant dans le procédé selon l'une quelconque des revendications 1 à 8 : le dispositif réseau ou le dispositif terminal.

**10.** Support de stockage lisible par ordinateur, dans lequel le support de stockage stocke des instructions informatiques, et lorsque les instructions informatiques sont exécutées par un appareil de communication, cela permet à l'appareil de communication de mettre en oeuvre le procédé selon l'une quelconque des revendications 1 à 8.

**11.** Produit de programme informatique, dans lequel le produit de programme informatique comprend des instructions informatiques, et lorsque les instructions informatiques sont exécutées par un appareil de communication, cela permet à l'appareil de communication de mettre en oeuvre le procédé selon l'une quelconque des revendications 1 à 8.

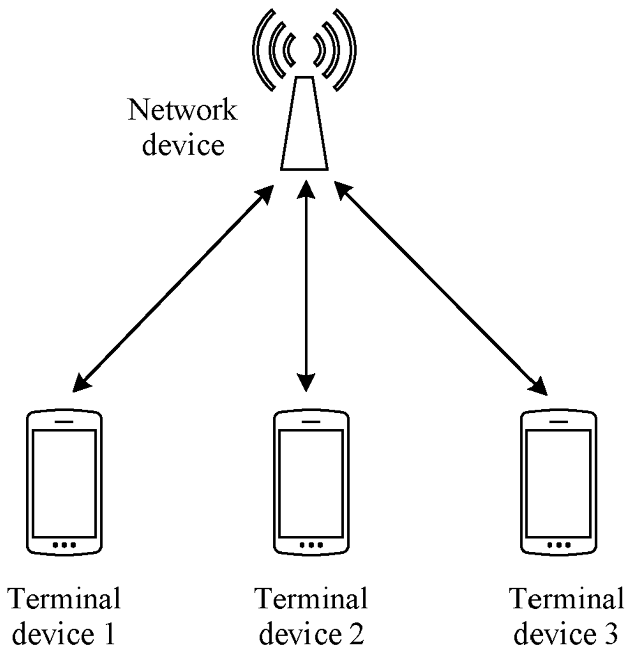


FIG. 1

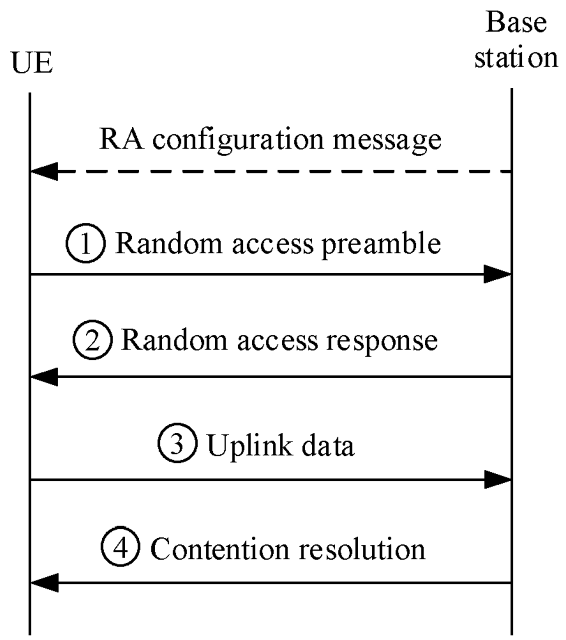


FIG. 2(a)

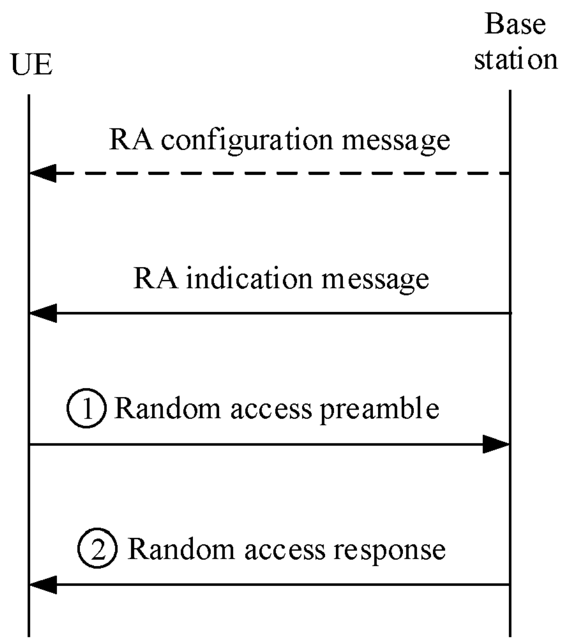


FIG. 2(b)

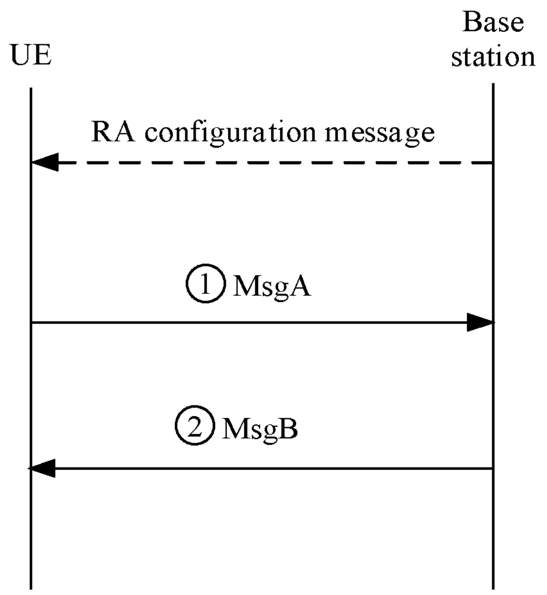
UE
Base station
RA configuration message
1 MsgA
2 MsgB

FIG. 3(a)

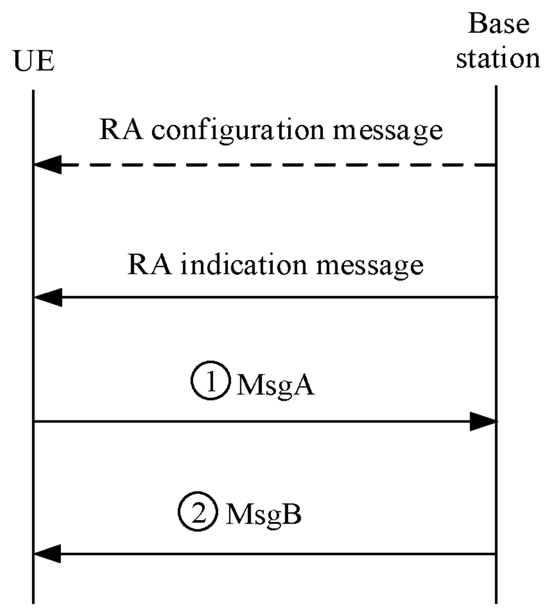
UE
Base station
RA configuration message
RA indication message
1 MsgA
2 MsgB

FIG. 3(b)

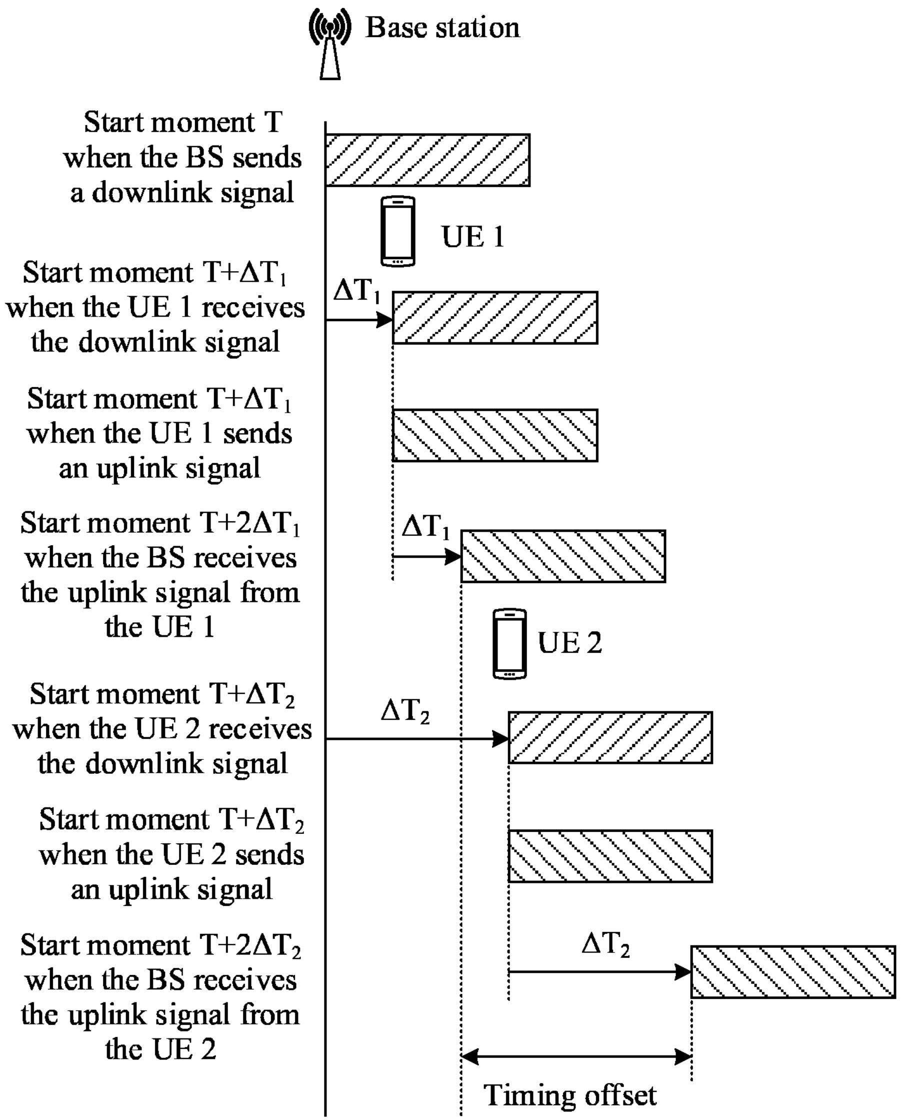


FIG. 4(a) Without timing advance adjustment

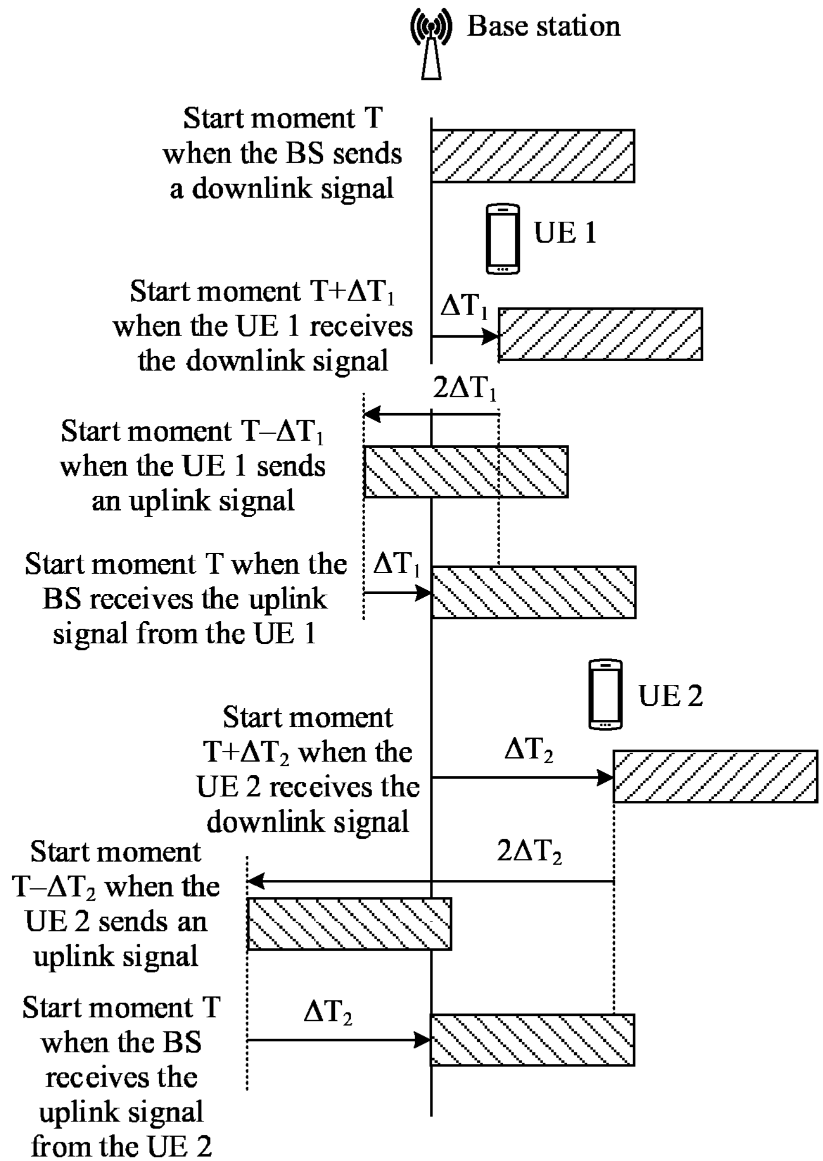


FIG. 4(b) With timing advance adjustment

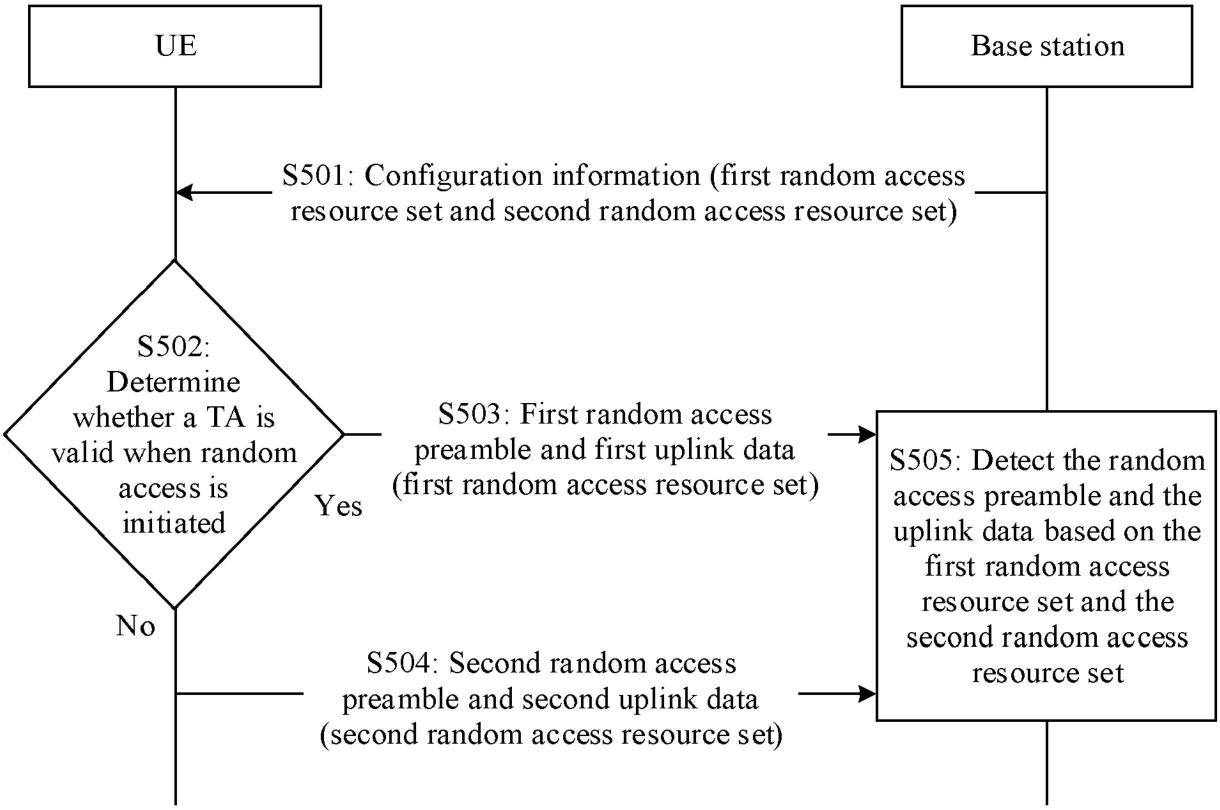
UE
Base station
S501: Configuration information (first random access resource set and second random access resource set)
S502: Determine whether a TA is valid when random access is initiated
Yes
No
S503: First random access preamble and first uplink data (first random access resource set)
S504: Second random access preamble and second uplink data (second random access resource set)
S505: Detect the random access preamble and the uplink data based on the first random access resource set and the second random access resource set

FIG. 5

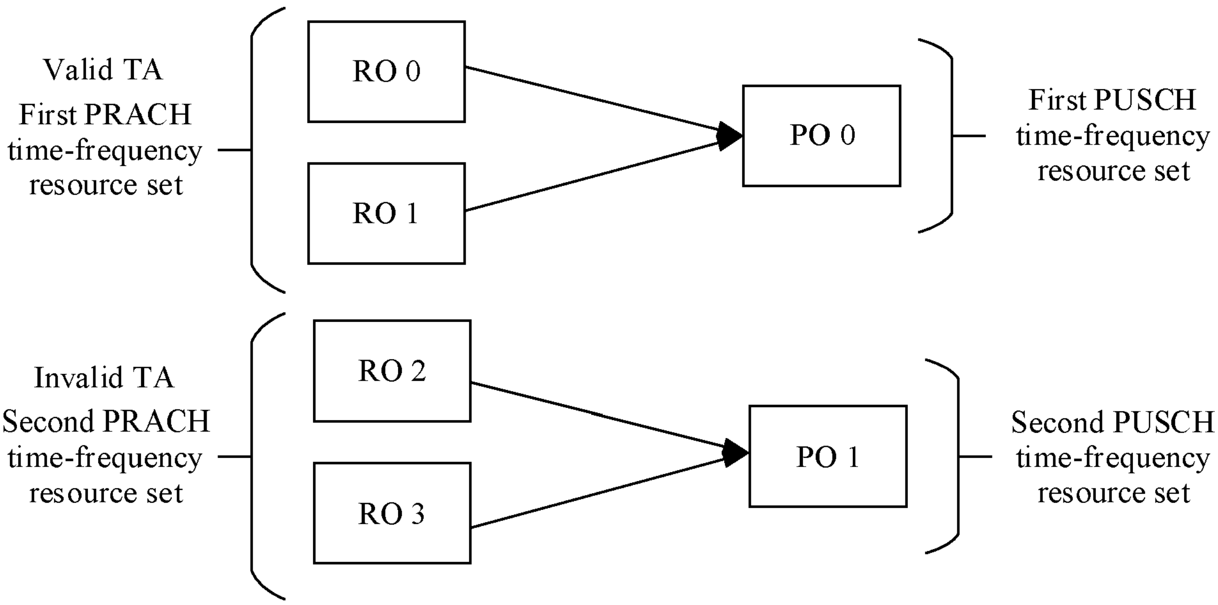
Valid TA
First PRACH time-frequency resource set
RO 0
RO 1
PO 0
First PUSCH time-frequency resource set
Invalid TA
Second PRACH time-frequency resource set
RO 2
RO 3
PO 1
Second PUSCH time-frequency resource set

FIG. 6A

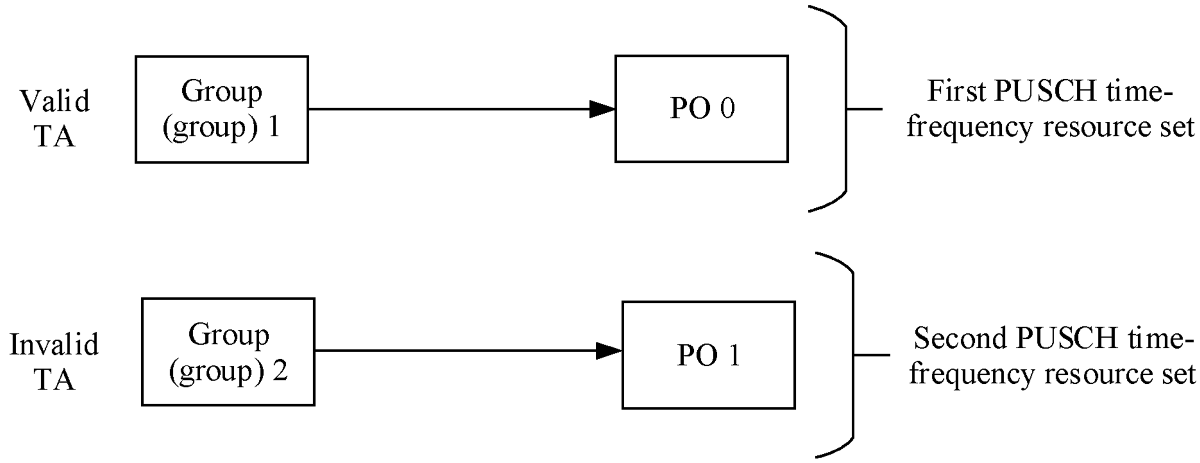
Valid TA
Group (group) 1
PO 0
First PUSCH time-frequency resource set
Invalid TA
Group (group) 2
PO 1
Second PUSCH time-frequency resource set

FIG. 6B

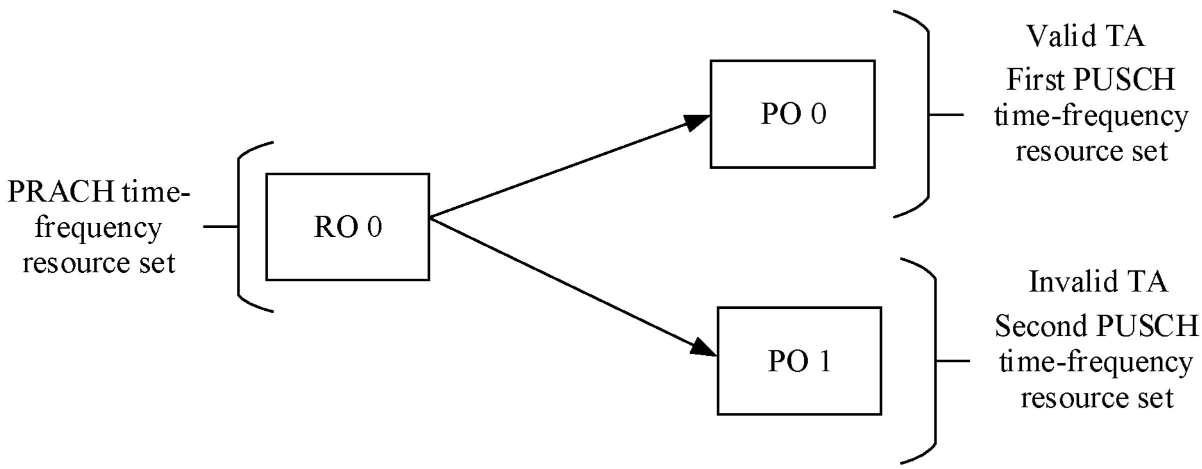
PRACH time-frequency resource set
RO 0
PO 0
Valid TA
First PUSCH time-frequency resource set
PO 1
Invalid TA
Second PUSCH time-frequency resource set

FIG. 6C

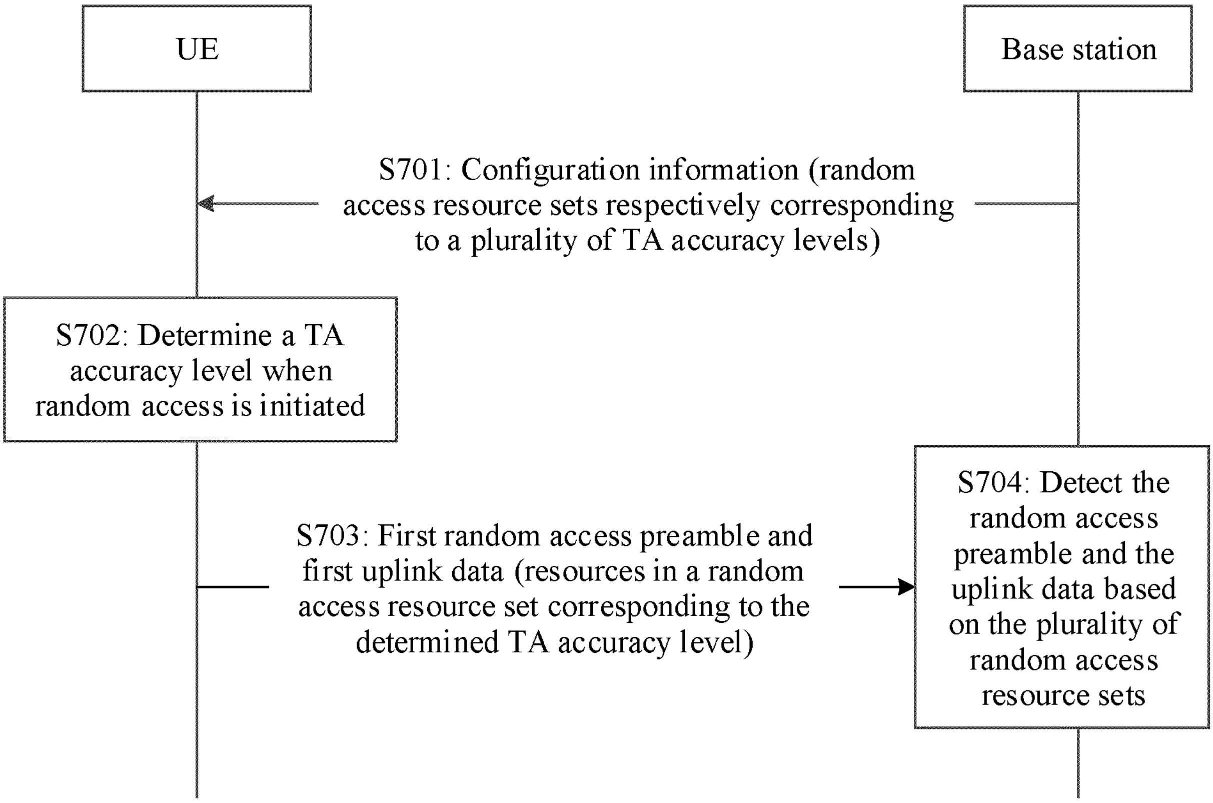
UE
Base station
S701: Configuration information (random access resource sets respectively corresponding to a plurality of TA accuracy levels)
S702: Determine a TA accuracy level when random access is initiated
S703: First random access preamble and first uplink data (resources in a random access resource set corresponding to the determined TA accuracy level)
S704: Detect the random access preamble and the uplink data based on the plurality of random access resource sets

FIG. 7

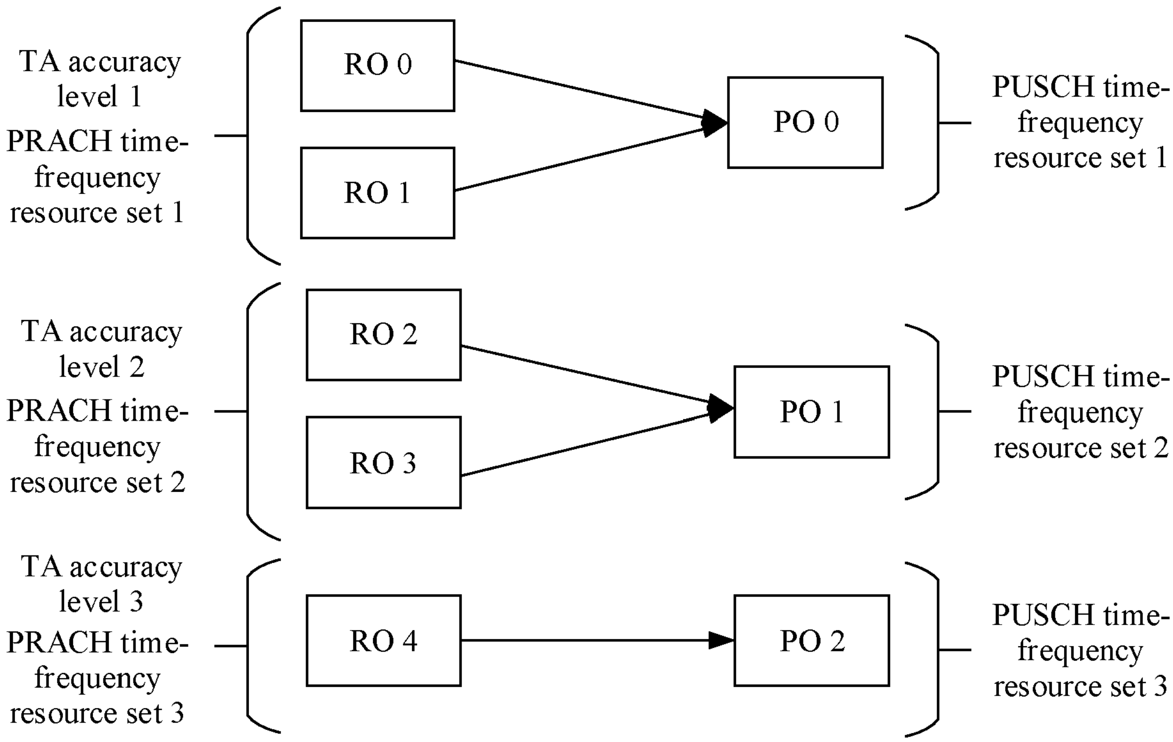
TA accuracy level 1
PRACH time-frequency resource set 1
RO 0
RO 1
PO 0
PUSCH time-frequency resource set 1
TA accuracy level 2
PRACH time-frequency resource set 2
RO 2
RO 3
PO 1
PUSCH time-frequency resource set 2
TA accuracy level 3
PRACH time-frequency resource set 3
RO 4
PO 2
PUSCH time-frequency resource set 3

FIG. 8A

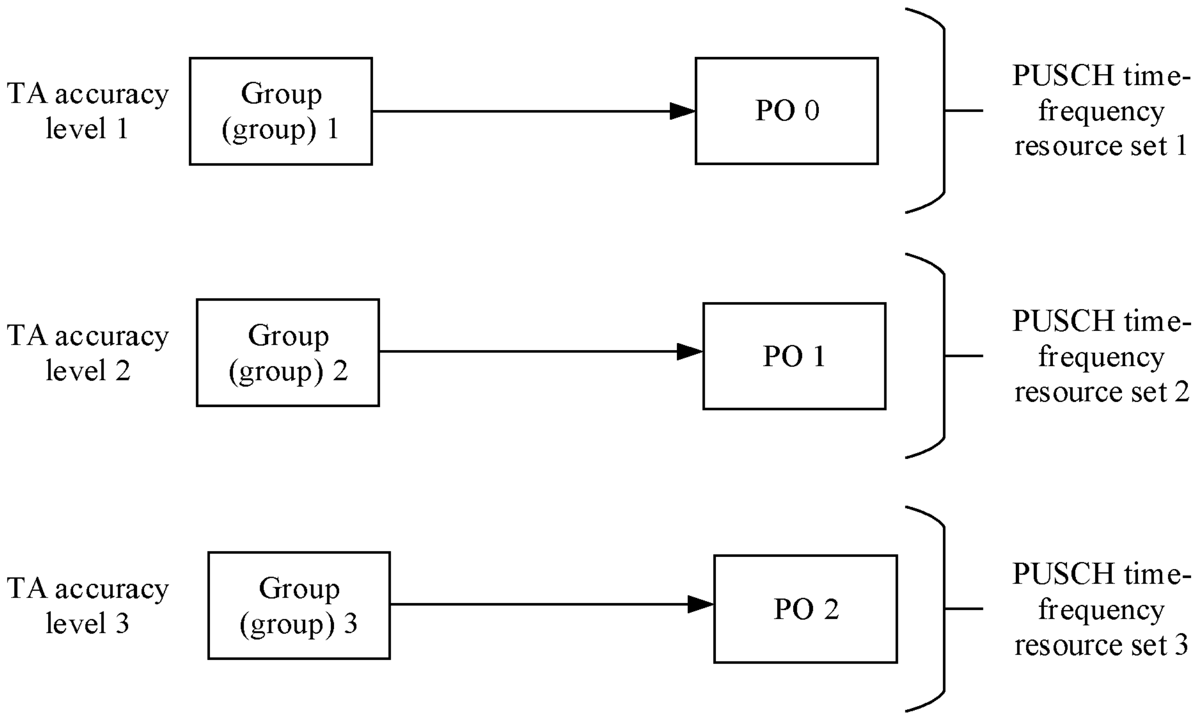
TA accuracy level 1
Group (group) 1
PO 0
PUSCH time-frequency resource set 1
TA accuracy level 2
Group (group) 2
PO 1
PUSCH time-frequency resource set 2
TA accuracy level 3
Group (group) 3
PO 2
PUSCH time-frequency resource set 3

FIG. 8B

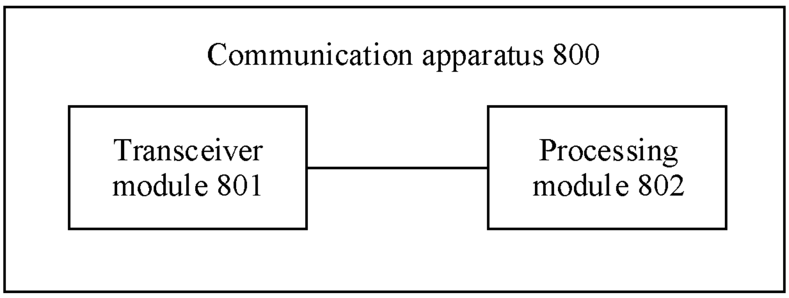
Communication apparatus 800
Transceiver module 801
Processing module 802

FIG. 9

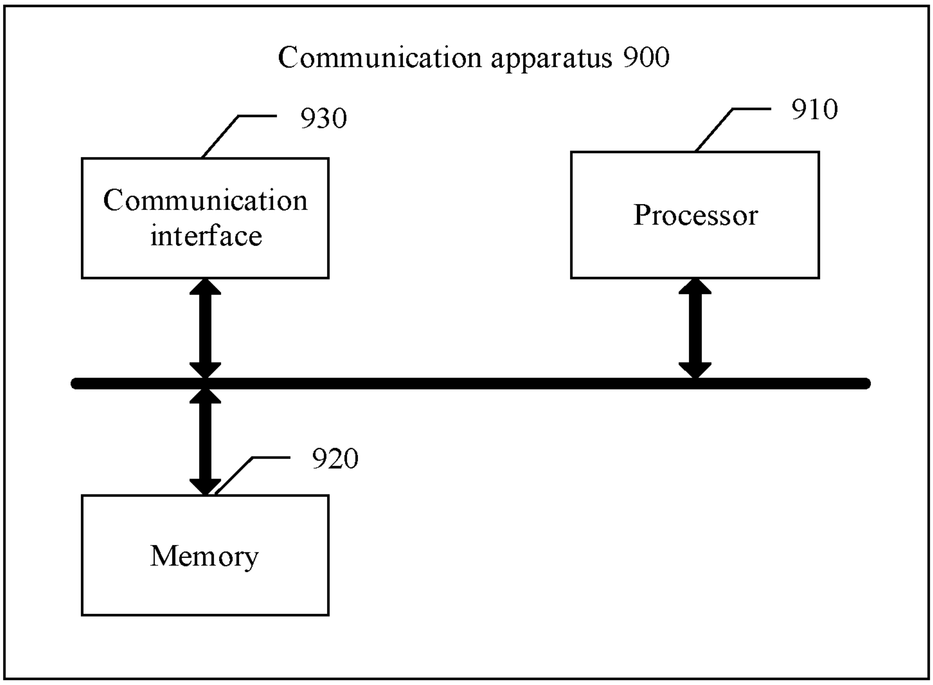
Communication apparatus 900
930
910
Communication interface
Processor
920
Memory

FIG. 10

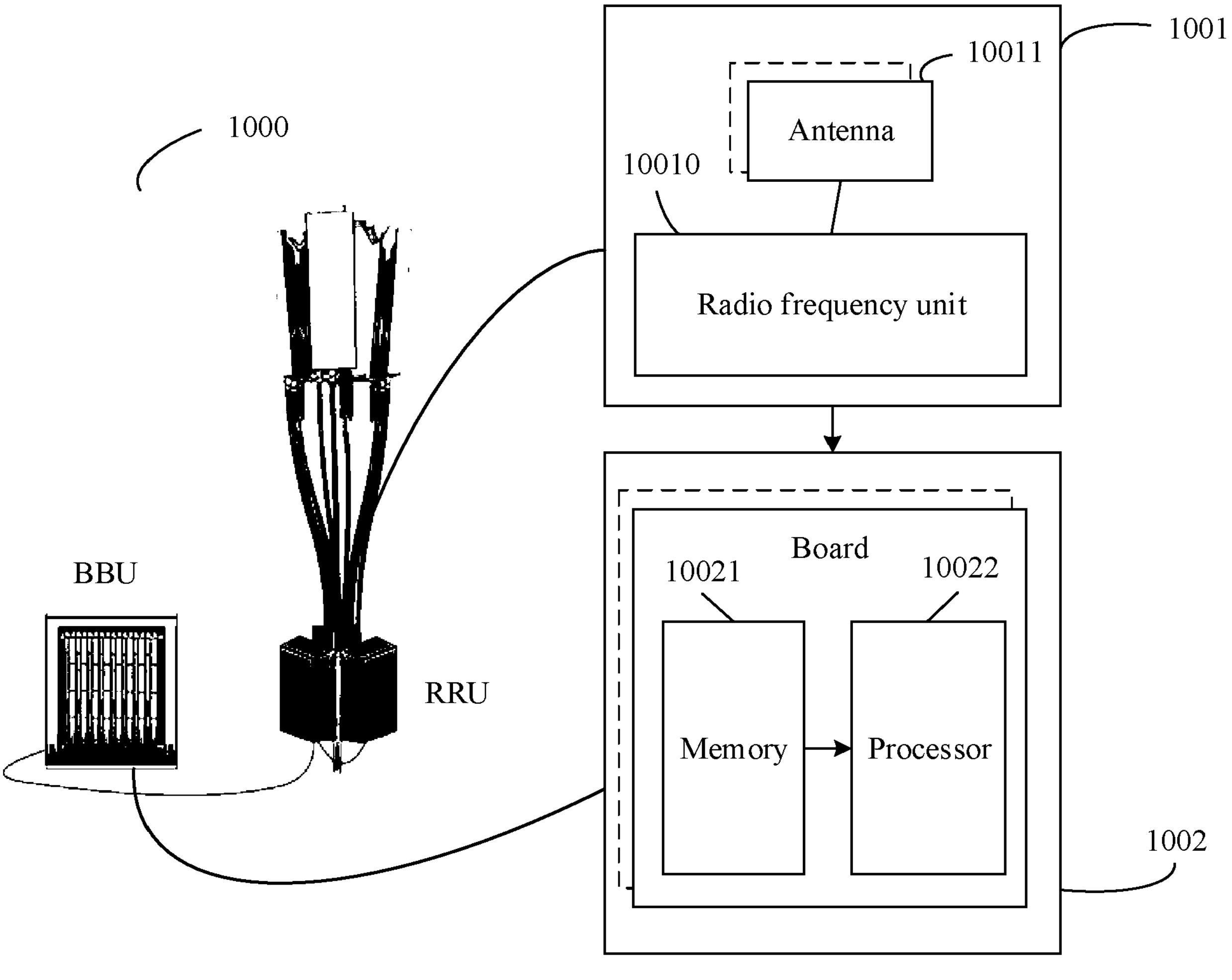
1000
BBU
RRU
1001
10011
Antenna
10010
Radio frequency unit
Board
10021
10022
Memory
Processor
1002

FIG. 11

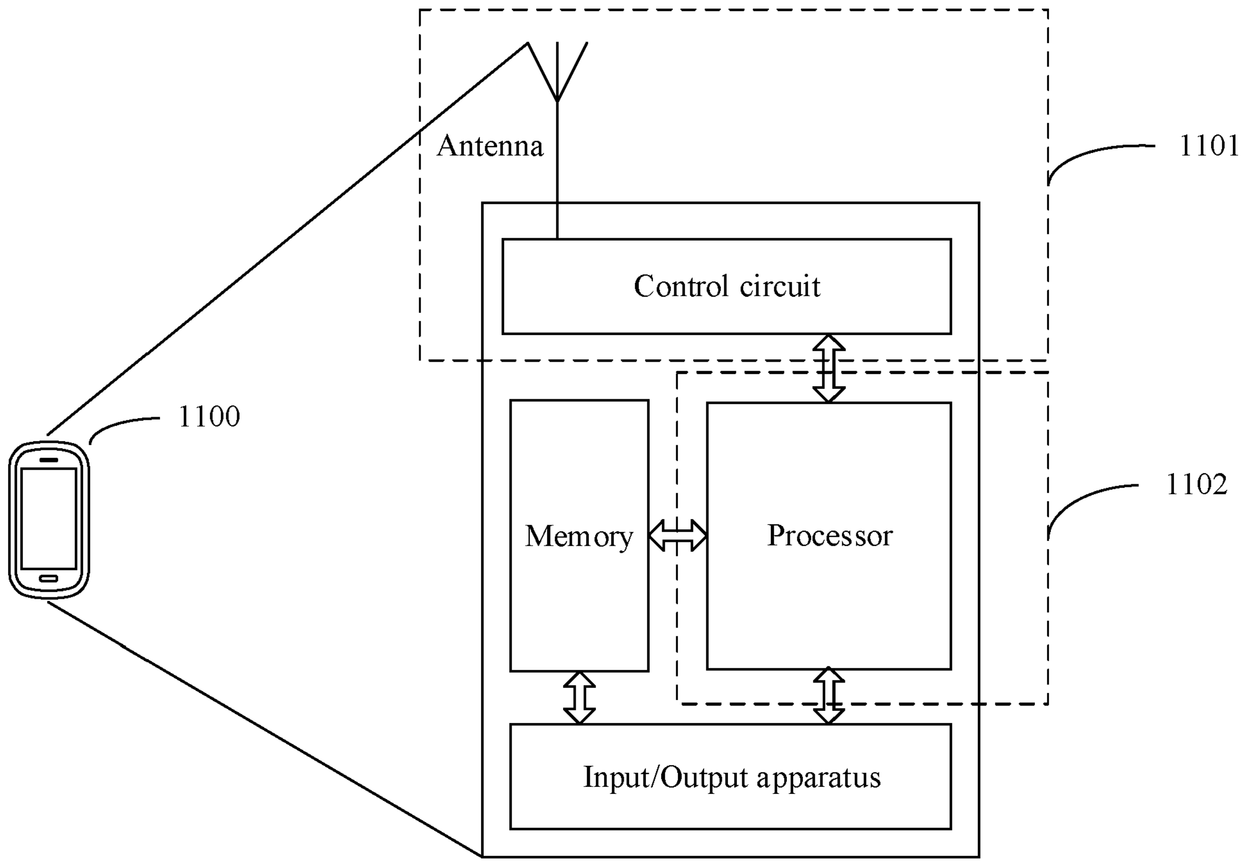
Antenna
1101
Control circuit
1100
1102
Memory
Processor
Input/Output apparatus

FIG. 12

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- CN 201910253051


### Non-patent literature cited in the description


- Discussion on Channel Structure for 2-Step RACH. *R1-1902027*